# EUROPÄISCHE PATENTSCHRIFT

(11) **EP 1 425 322 B1**
(45) Veröffentlichungstag und Bekanntmachung des Hinweises auf die Patenterteilung: **21.10.2009**
(21) Anmeldenummer: 02772180.2
(22) Anmeldetag: 21.08.2002
(51) Int. Cl.: C08F 257/00, C08F 257/02

(54) **FORMKÖRPER AUS KERN-MANTEL-PARTIKELN**
MOULDED BODIES CONSISTING OF CORE-SHELL PARTICLES
CORPS MOULE A PARTIR DE PARTICULES NOYAU-ENVELOPPPE

(30) Priorität: 14.09.2001 DE 10145450; 25.06.2002 DE 10228228
(43) Veröffentlichungstag der Anmeldung: 09.06.2004
(60) Teilanmeldung: 04017278.5
(73) Patentinhaber: Merck Patent GmbH, 64293 Darmstadt (DE)
(72) Erfinder: ANSELMANN, Ralf, 67305 Ramsau (DE); WINKLER, Holger, 64291 Darmstadt (DE); HELLMANN, Götz, Peter, 55129 Mainz (DE); RUHL, Tilmann, 64347 Griesheim (DE); VULPIUS, Günther, 64560 Riedstadt-3 (DE); DÖRR, Harald, 64409 Messel (DE)
(86) Internationale Anmeldenummer: PCT/EP2002/009324
(87) Internationale Veröffentlichungsnummer: WO 2003/025035

(56) Entgegenhaltungen:
- EP-A- 0 441 559
- EP-A- 0 955 323
- US-A- 4 391 928

## Beschreibung

Die Erfindung betrifft Formkörper mit optischem Effekt, die im wesentlichen aus Kern-Mantel-Partikeln bestehen, sowie die Kern-Mantel-Partikel und Verfahren zur Herstellung der Formkörper bzw. Kern-Mantel-Partikel.

Polymere Kern/Schale-Partikel sind zur Herstellung von Klebstoffen, Bindersystemen, insbesondere auch als Verstärkungsmaterialien bei der Produktion bestimmter Gruppen von Verbundwerkstoffen empfohlen worden. Solche Verbundstoffe bestehen aus einer Kunststoffmatrix und darin eingebetteten Verstärkungselementen. Ein Problem bei der Produktion derartiger Werkstoffe besteht in der Herstellung einer formschlüssigen Verbindung zwischen Matrix- und Verstärkungsmaterial. Nur wenn eine solche Verbindung besteht, können Kräfte von der Matrix auf die Verstärkungselemente übertragen werden. Je stärker sich die mechanischen Eigenschaften von Matrix- und Verstärkungsmaterial, insbesondere hinsichtlich Elastizität, Härte und Verformbarkeit, voneinander unterscheiden, umso größer ist die Gefahr der Ablösung der Matrix von den Verstärkungselementen. Dieser Gefahr soll dadurch begegnet werden, dass die polymeren Verstärkungspartikel mit einem zweiten Polymermaterial ummantelt werden, das dem Matrixmaterial ähnlicher ist und daher eine festere Bindung zur Matrix eingehen kann. (Young-Sam Kim, "Synthese und Charakterisierung von mehrphasigen polymeren Latices mit Kern/Schale-Morphologie", Diss. Univ. Karlsruhe (TH), Verlag Shaker Aachen, (1993), Seiten 2-22.). Zusätzlich ist auch empfohlen worden, das Ummantelungspolymer auf das Verstärkungspolymer aufzupfropfen, um mittels kovalenter Bindungen auch eine Ablösung der Schale von den Verstärkungspartikeln zu vermeiden. (W.-M. Billig-Peters, "Kern-Schale-Polymere mit Hilfe polymerer Azoinitiatoren", Diss. Univ. Bayreuth, (1991).

Die gezielte Herstellung von Kern/Schale-Polymeren erfolgt in der Regel durch stufenweise Emulsionspolymerisation, wobei in der ersten Stufe zunächst ein Latex aus Kernpartikeln erzeugt, und in der zweiten Stufe das Schalepolymer hergestellt wird. Hierbei wirken die Kernpartikel als "Saat-Partikel", auf deren Oberfläche sich die Schalepolymeren vorzugsweise abscheiden.

Die Abscheidung kann zu einer mehr oder weniger symmetrischen Schale um Kernpartikel führen, es können aber auch unregelmäßige Abscheidungen erfolgen, so dass Gebilde von brombeerartigem Aussehen entstehen. Ein guter Überblick über die Herstellung von zweiphasigen Polymerteilchen und die dabei auftretenden Erscheinungen, insbesondere die Ausbildung von Kern/Schale-Partikeln, findet sich in der Dissertation von Katharina Landfester, "Synthese und Charakterisierung von Kern-Schale-Latices mit Elektronenmikroskopie und Festkörper-NMR", Universität Mainz, (1995).

Natürliche Edel-Opale sind aus Domänenaufgebaut, bestehend aus monodispersen, dichtgepackten und daher regelmäßig angeordneten Kieselgel-Kugeln mit Durchmessern von 150-400 nm. Das Farbenspiel dieser Opale kommt durch Bragg-artige Streuung des einfallenden Lichtes an den Gitterebenen der kristallartig angeordneten Domänen zustande.

Es hat nicht an Versuchen gefehlt, weiße und schwarze Opale für Schmuckzwecke zu synthetisieren, wobei Wasserglas oder Silikonester als Ausgangsprodukt verwendet wurden.

US 4 703 020 beschreibt ein Verfahren zur Herstellung eines dekorativen Materials, das aus amorphen Silica-Kügelchen besteht, die dreidimensional angeordnet sind, wobei sich in den Zwischenräumen zwischen den Kügelchen Zirkoniumoxid oder Zirkoniumhydroxid befindet. Die Kügelchen haben einen Durchmesser von 150-400 nm. Die Herstellung erfolgt dabei in zwei Stufen. In einer ersten Stufe läßt man aus einer wässrigen Suspension Siliciumdioxidkügelchen sedimentieren. Die erhaltene Masse wird dann an der Luft getrocknet und anschließend bei 800 °C kalziniert. Das kalzinierte Material wird in einer zweiten Stufe in die Lösung eines Zirkoniumalkoxides eingebracht, wobei das Alkoxid in die Zwischenräume zwischen den Kerne eindringt und durch Hydrolyse Zirkoniumoxid ausgefällt wird. Dieses Material wird dann anschließend bei 1000-1300 °C kalziniert.

Aus der US-A-4 434 010 sind Pigmente auf anorganischer Basis bekannt, die stark ausgeprägte Farbflops aufweisen. Diese Pigmente sind gekennzeichnet durch einen extrem homogenen Aufbau aus Schichten mit unterschiedlichen Brechungsindices. Dieser Aufbau führt zu ausgeprägten Interferenzeffekten, die für die Farberzeugung ausgenutzt werden. Die Herstellung dieser Pigmente ist allerdings schwierig und nur mittels aufwendiger und kostspieliger Produktionsverfahren möglich.

Aus der US-A-5 364 557 sind organische Effektpigmente auf der Basis von cholesterischen Flüssigkeiten bekannt. Bei diesen ergibt sich ein Interferenzeffekt durch eine helikale Überstruktur. Auch hier sind die für die Herstellung erforderlichen Materialien kompliziert herzustellen und daher sehr kostspielig. Die Produktion der Pigmente aus den cholesterischen Flüssigkristallen (LCs) erfolgt in der Weise, dass die chloesterische Masse in dünner Schicht auf eine Trägerfolie aufgebracht, in der LC-Phase eine photochemische Polymerisation durchgeführt, und der so erhaltene Film von der Folie abgelöst und gemahlen wird. Neben der teueren Herstellung der Ausgangsmaterialien ist es ein sehr gravierender Nachteil dieses Verfahrens, dass während des Produktionsprozesses der Orientierung der LCs allergrößte Aufmerksamkeit gewidmet werden muß, da diese bereits durch kleinste Verunreinigungen negativ beeinflußt werden kann.

Ein Verfahren zum Beschichten und Bedrucken von Substraten, bei dem cholesterische Flüssigkristalle zum Einsatz kommen, ist aus der WO 96/02597 bekannt. Bei diesem Verfahren werden eine oder mehrere flüssigkristalline Verbindungen, von denen mindestens eine chiral ist, und die eine oder zwei polymerisierbare Gruppen aufweisen, zusammen mit geeigneten Co-Monomeren auf ein Substrat aufgetragen - sofern dies durch ein Druckverfahren geschieht, werden der Mischung noch Dispergiermittel zugefügt - und copolymerisiert. Die so erhaltenen Schichten können, wenn sie spröde sind, vom Substrat abgelöst, zerkleinert und als Pigmente verwendet werden.

Es sind ferner wässrige, monodisperse Polymerdispersionen bekannt, z. B. aus T. Okubu, Prog. Polym. Sci. 18 (1993) 481-517, die in flüssiger Form, gegebenenfalls nach Nachreinigung, zu Latex-Kristallisation neigen und dadurch zu Farbeffekten führen.

Zur Herstellung monodisperser Partikel sind eine Vielzahl von Publikationen bekannt, z. B. EP-A-0 639 590 (Herstellung durch Fällungspolymerisation), A. Rudin, J. Polym. Sci., A. Polym. Sci. 33 (1995) 1849-1857 (monodisperse Partikel mit Kern-Schale-Struktur), EP-A-0 292 261 (Herstellung unter Zusatz von Saatpartikeln).

In der EP-A-0 441 559 werden Kern-Schale Polymere mit unterschiedlichen Brechungsindices von Kern und Schale und die Verwendung dieser Materialien als Additive zu Papierbeschichtungsmitteln beschrieben.

In der EP-A-0 955 323 werden Kern/Schale-Partikel, deren Kern- und Schalenmaterialien ein Zweiphasensystem ausbilden können und die dadurch gekennzeichnet sind, dass das Schalenmaterial verfilmbar ist und die Kerne unter den Bedingungen der Verfilmung der Schale im wesentlichen formbeständig sind, durch das Schalenmaterial nicht oder nur in sehr geringem Ausmaß quellbar sind und eine monodisperse Größenverteilung aufweisen, wobei ein Unterschied zwischen den Brechungsindices des Kernmaterials und des Schalenmaterials von mindestens 0,001 besteht. Ferner wird die Herstellung der Kern/Schale-Partikel sowie ihre Verwendung zur Herstellung von Effektfarbmitteln beschrieben. Das Verfahren zur Herstellung eines Effektfarbmittels umfasst dabei die folgenden Schritte: Auftrag der Kern/Schale-Partikel auf ein Substrat geringer Haftfähigkeit, Gegebenenfalls Verdunsten lassen oder Abtreiben des eventuell in der aufgetragenen Schicht enthaltenen Lösungs- oder Verdünnungsmittels, Überführung des Schalenmaterials der Kern/Schale-Partikel in eine flüssige, weiche oder visco-elastische MatrixPhase, Orientierung der Kerne der Kern/Schale-Partikel zumindest zu Domänen regelmäßiger Struktur, Aushärtung des Schalenmaterials zur Fixierung der regelmäßigen Kern-Struktur, Ablösung des ausgehärteten Films vom Substrat und sofern ein Pigment oder ein Pulver hergestellt werden soll, Zerkleinerung des abgelösten Films auf die gewünschte Partikelgröße. Bei diesen in der EP-A-0 955 323 offenbarten Kern-Schale-Partikeln "schwimmt" der Kern in der Schalenmatrix; eine Fernordnung der Kerne bildet sich in der Schmelze nicht aus, sondern lediglich eine Nahordnung der Kerne in Domänen. Dadurch eignen sich diese Partikel nur eingeschränkt zur Verarbeitung mit bei Polymeren üblichen Methoden.

Für technische Anwendungen wäre es allerdings wünschenswert, auch großflächige Strukturen oder dreidimensionale Formkörper direkt mit einer Fernordnung der Kerne herstellen zu können, die den optischen Effekt über die gesamte Fläche homogen und mit großer Brillianz zeigen.

Aufgabe der vorliegenden Erfindung war es, die o. g. Nachteile zu vermeiden und Formkörper zu Verfügung zu stellen, die mit üblichen Verarbeitungsmethoden erhalten werden können.

Ein erster Gegenstand der vorliegenden Erfindung sind daher Formkörper mit optischem Effekt, im wesentlichen bestehend aus Kern-Mantel-Partikeln, deren Mantel eine Matrix bildet und deren Kern im wesentlichen fest ist und eine im wesentlichen monodisperse Größenverteilung aufweist, wobei ein Unterschied zwischen den Brechungsindices des Kernmaterials und des Mantelmaterials besteht, dadurch gekennzeichnet, dass der Formkörper erhältlich ist durch ein Verfahren, bei dem a) die Kern-Mantel-Partikel auf eine Temperatur erhitzt werden, bei welcher der Mantel fließfähig ist, und b) die fließfähigen Kern-Mantel-Partikel einer mechanischen Krafteinwirkung ausgesetzt werden.

Ein weiterer Gegenstand der vorliegenden Erfindung ist ein Verfahren zur Herstellung von Formkörpern mit optischem Effekt, das dadurch gekennzeichnet ist, dass, a) Kern-Mantel-Partikel, deren Mantel eine Matrix bildet und deren Kern im wesentlichen fest ist und eine im wesentlichen monodisperse Größenverteilung aufweist, wobei ein Unterschied zwischen den Brechungsindices des Kernmaterials und des Mantelmaterials besteht, auf eine Temperatur erhitzt werden, bei welcher der Mantel fließfähig ist, und b) die fließfähigen Kern-Mantel-Partikel aus a) einer mechanischen Kraft ausgesetzt werden.

Unter einem optischen Effekt werden dabei erfindungsgemäß sowohl Effekte im sichtbaren Wellenlängenbereich des Lichtes als auch beispielsweise Effekte im UV- oder Infrarot-Bereich verstanden. In letzter Zeit hat es sich eingebürgert, derartige Effekte allgemein als photonische Effekte zu bezeichnen. Alle diese Effekte sind optische Effekte im Sinne der vorliegenden Erfindung, wobei es sich in einer bevorzugten Ausführungsform bei dem Effekt um eine Opaleszenz im sichtbaren Bereich handelt. Im Sinne einer üblichen Definition des Begriffes handelt es sich bei den erfindungsgemäßen Formkörpern um photonische Kristalle (vgl. Nachrichten aus der Chemie; 49(9) September 2001; S. 1018 - 1025).

Erfindungsgemäß ist in den Kern-Mantel-Partikeln der Mantel mit dem Kern über eine Zwischenschicht verbunden.

Weiter ist es erfindungsgemäß bevorzugt, wenn der Kern der Kern-Mantel-Partikel aus einem Material besteht, das entweder nicht oder bei einer Temperatur oberhalb der Fließtemperatur des Mantelmaterials fließfähig wird. Dies kann erreicht werden durch den Einsatz polymerer Materialien mit entsprechend hoher Glasübergangstemperatur (T_{g}), vorzugsweise vernetzter Polymere bzw. durch Einsatz anorganischer Kernmaterialien. Die geeigneten Materialen im einzelnen werden weiter unten beschrieben.

In einer bevorzugten Variante der Herstellung erfindungsgemäßer Formkörper liegt. die Temperatur in Schritt a) mindestens 40°C, vorzugsweise mindestens 60°C oberhalb des Glaspunktes des Mantels der Kern-Mantel-Partikel. Es hat sich empirisch gezeigt, dass die Fließfähigkeit des Mantels in diesem Temperaturbereich den Anforderungen für eine wirtschaftliche Herstellung der Formkörper in besonderem Maße entspricht.

In einer ebenfalls bevorzugten Verfahrensvariante, die zu erfindungsgemäßen Formkörpern führt, werden die fließfähigen Kern-Mantel-Partikel unter Einwirkung der mechanischen Kraft aus b) auf eine Temperatur abgekühlt , bei welcher der Mantel nicht mehr fließfähig ist.

Bei der mechanischen Krafteinwirkung kann es sich erfindungsgemäß um eine solche Krafteinwirkung handeln, die bei üblichen Verarbeitungsschritten von Polymeren erfolgt. In bevorzugten Varianten der vorliegenden Erfindung erfolgt die mechanische Krafteinwirkung entweder:
- durch uniaxiales Pressen oder
- Krafteinwirkung während eines Spritzgußvorganges oder
- während eines Transferpressvorganges,
- während einer (Co-) Extrusion oder
- während eines Kalandriervorganges oder
- während eines Blasvorganges.

Erfolgt die Krafteinwirkung durch uniaxiales Pressen, so handelt es sich bei den erfindungsgemäßen Formkörpern vorzugsweise um Filme. Erfindungsgemäße Filme können dabei vorzugsweise auch durch Kalandrieren, Folienblasen oder Flachfolienextrusion hergestellt werden. Die verschiedenen Möglichkeiten der Verarbeitung von Polymeren unter Einwirkung mechanischer Kräfte sind dem Fachmann wohl bekannt und können beispielsweise dem Standardlehrbuch Adolf Franck, "Kunststoff-Kompendium"; Vogel-Verlag; 1996 entnommen werden.

Werden Formkörper durch Spritzguß hergestellt, so ist es insbesondere bevorzugt, wenn die Entformung erst nach Abkühlung der Form mit dem darin enthaltenen Formteil erfolgt. In der technischen Durchführung ist es dabei vorteilhaft, wenn Formen mit großem Kühlkanalquerschnitt eingesetzt werden, da die Abkühlung dann in kürzerer Zeit erfolgen kann. Es hat sich gezeigt, dass durch die Abkühlung in der Form die erfindungsgemäßen Farbeffekte deutlich intensiver werden. Es wird vermutet, dass es bei diesem gleichmäßigen Abkühlvorgang zu einer besseren Ausordnung der Kern-Mantel-Partikel zu dem Gitter kommt. Dabei ist es insbesondere vorteilahaft, wenn die Form vor dem Einspritzvorgang aufgeheizt wurde.

Dabei können die erfindungsgemäßen Formkörper, wenn es technisch vorteilhaft ist, Hilfs- und Zusatzstoffe enthalten. Sie können der optimalen Einstellung der für die Anwendung und Verarbeitung gewünschten bzw. erforderlichen anwendungstechnischen Daten, bzw. Eigenschaften dienen. Beispiele für derartige Hilfs- und/oder Zusatzstoffe sind Antioxidantien, UV-Stabilisatoren, Biozid, Weichmacher, Filmbildungshilfsmittel, Verlaufmittel, Füllmittel, Schmelzhilfsmittel, Haftmittel, Trennmittel, Auftragshilfsmittel, Entformungshilfsmittel, Mittel zur Viskositätsmodifizierung, z. B. Verdicker.

Besonders empfehlenswert sind Zusätze von Filmbildungshilfsmitteln und Filmmodifizierungsmitteln auf der Basis von Verbindungen der allgemeinen Formeln HO-CₙH₂ₙ-O-(CₙH₂ₙ-O)ₘH, worin n eine Zahl von 2 bis 4, vorzugsweise 2 oder 3, und m eine Zahl von 0 bis 500 ist. Die Zahl n kann innerhalb der Kette variieren und die verschiedenen Kettenglieder können in statistischer oder in blockweiser Verteilung eingebaut sein. Beispiele für derartige Hilfsmittel sind Ethylenglycol, Propylenglycol, Di-, Tri- und Tetraethylenglycol, Di-, Tri- und Tetrapropylenglycol, Polyethylenoxide, Polypropylenoxid und Ethylenoxid/Propylenoxid-Mischpolymere mit Molgewichten bis ca. 15000 und statistischer oder blockartigen Verteilung der Ethylenoxid und Propylenoxid-Baugruppen.

Gegebenenfalls sind auch organische oder anorganische Lösungs-, Dispergier- oder Verdünnungsmittel, die beispielsweise die offene Zeit der Formulierung, d. h. die für ihren Auftrag auf Substrat zur Verfügung stehende Zeit, vedängern, Wachse oder Schmelzkleber als Additive möglich.

Gewünschtenfalls können den Formkörpern auch Stabilisatoren gegen UV-Strahlung und Wettereinflüsse zugesetzt werden. Hierzu eignen sich z. B. Derivate des 2,4-Dihydroxybenzophenons, Derivate des 2-Cyan-3,3'-dephenylacrylats, Derivate des 2,2',4,4'-Tetrahydroxybenzophenons, Derivate des o-Hydroxyphenyl-benztriazols, Salicylsäureester, o-Hydroxyphenyl-s-triazine oder sterisch gehinderte Amine. Auch diese Stoffe können einzeln oder als Gemische eingesetzt werden.

Die Gesamtmenge der Hilfs- und/oder Zusatzstoffe beträgt bis zu 40 Gew.-%, vorzugsweise bis zu 20 Gew.-%, insbesondere bevorzugt bis zu 5 Gew.-% des Gewichts der Formkörper. Dementsprechend bestehen die Formkörper zu mindestens 60 Gew.-%, vorzugsweise zu mindestens 80 Gew.-% und insbesondere bevorzugt zu mindestens 95 Gew.-% aus Kern-Mantel-Partikeln besteht.

Zur Erzielung des erfindungsgemäßen optischen oder photonischen Effektes ist es wünschenswert, dass die Kern-Mantel-Partikel einen mittleren Teilchendurchmesser im Bereich von etwa 5 nm bis etwa 2000 nm aufweisen. Dabei kann es insbesondere bevorzugt sein, wenn die Kern-Mantel-Partikel einen mittleren Teilchendurchmesser im Bereich von etwa 5 bis 20 nm, vorzugsweise 5 bis 10 nm, aufweisen, In diesem Fall können die Kerne als "Quantum dots" bezeichnet werden; sie zeigen die entsprechenden aus der Literatur bekannten Effekte. Zur Erzielung von Farbeffekten im Bereich des sichtbaren Lichtes ist es von besonderem Vorteil, wenn die Kern-Mantel-Partikel einen mittleren Teilchendurchmesser im Bereich von etwa 50 - 500 nm aufweisen. Insbesondere bevorzugt werden Partikel im Bereich von 100 - 500 nm eingesetzt, da bei Teilchen in diesem Größenordnungsbereich (in Abhängigkeit des in der photonischen Struktur erzielbaren Brechungsindexkontrastes) die Reflektionen verschiedener Wellenlängen des sichtbaren Lichtes sich deutlich voneinander unterscheiden und so die für optische Effekte im sichtbaren Bereich besonders wichtige Opaleszenz besonders ausgeprägt in verschiedensten Farben auftritt. In einer Variante der vorliegenden Erfindung ist es jedoch auch bevorzugt, vielfache dieser bevorzugten Teilchengröße einzusetzen, die dann zu Reflexen entsprechend der höheren Ordnungen und damit zu einem breiten Farbenspiel führen.

Entscheidend für die Intensität der beobachteten Effekte ist auch die Differenz der Brechungsindices von Kern und Mantel. Erfindungsgemäße Formkörper weisen vorzugsweise eine Differenz zwischen den Brechungsindices des Kernmaterials und des Mantelmaterials von mindestens 0,001, vorzugsweise mindestens 0,01 und insbesondere bevorzugt mindestens 0,1 auf.

In einer besonderen Ausführungsform der Erfindung sind in die Matrixphase der Formkörper neben den Kernen der Kern-Mantel-Partikel weitere Nanopartikel eingelagert. Diese Partikel werden hinsichtlich ihrer Partikelgröße so ausgewählt, dass sie in die Hohlräume der Kugelpackung aus den Kernen passen und so die Anordnung der Kerne nur wenig verändern. Durch gezielte Auswahl entsprechender Materialien und/oder der Teilchengröße ist es zum einen möglich die optischen Effekte der Formkörper zu verändern, beispielsweise deren Intensität zu erhöhen. Zum ändern kann durch Einlagerung geeigneter "Quantum dots" die Matrix entsprechend funktionalisiert werden. Bevorzugte Materialien sind anorganische Nanopartikel, insbesondere Nanopartikel von Metallen oder von II-VI- bzw. III-V-Halbleitern oder von Materialen, welche die magnetischen/elektrischen (elektronischen) Eigenschaften der Materialien beeinflussen. Beispiele für bevorzugte Nanopartikel sind Edelmetalle, wie Silber, Gold und Platin, Halbleiter oder Isolatoren, wie Zink- und Cadmiumchalkogenide, Oxide, wie Hämatit, Magnetit oder Perowskite, oder Metallpnictide, z. B. Galliumnitrid oder Mischphasen dieser Materialien.

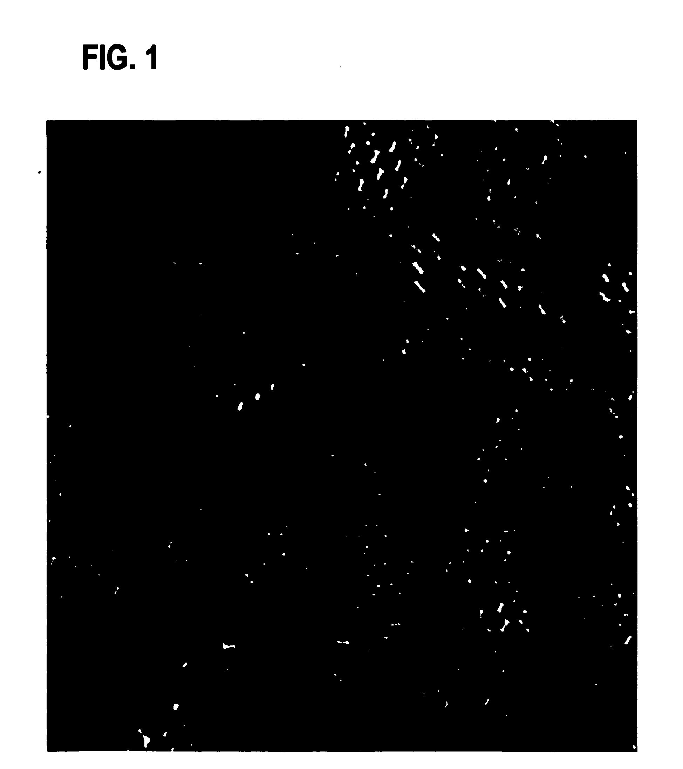

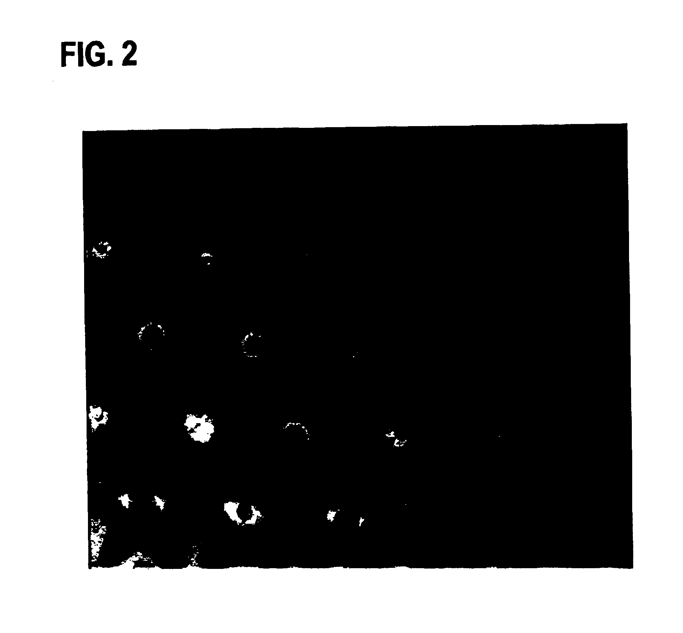

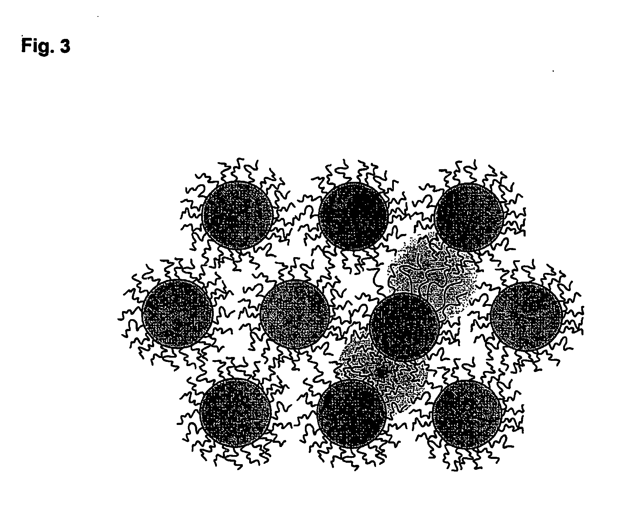

Der genaue Mechanismus, der zu der gleichmäßigen Orientierung (Figuren 1 und 2) der Kern-Mantel-Partikel in den erfindungsgemäßen Formkörpern führt, ist bislang unbekannt. Es hat sich jedoch gezeigt, dass die Krafteinwirkung essentiell zur Ausbildung der weitreichenden Ordnung ist. Wie in Figur 3 dargestellt, wird vermutet, dass die Elastizität des Mantelmaterials unter den Verarbeitungsbedingungen entscheidend für den Ordnungsprozess ist. Die Kettenenden der Mantelpolymere haben im allgemeinen das Bestreben, eine Knäuelform anzunehmen. Kommen sich zwei Partikel zu nahe, so werden die Knäuel nach der Modellvorstellung gestaucht und es entstehen abstoßende Kräfte. Da die Mantel-Polymerketten verschiedener Partikel auch miteinander in Wechselwirkung treten, werden die Polymerketten nach dem Modell gestreckt, wenn sich zwei Partikel voneinander entfernen. Durch das Bestreben der Mantel-Polymerketten wieder eine Knäuelform anzunehmen, entsteht eine Kraft, welchedie Partikel wieder näher zusammen zieht. Nach der Modellvorstellung wird die weitreichende Ordnung der Partikel im Formkörper (Figuren 1 und 2) durch das Wechselspiel dieser Kräfte erzeugt.

Als besonders gut geeignet zur Herstellung erfindungsgemäßer Formkörper haben sich dabei Kern-Mantel-Partikel erwiesen, deren Mantel mit dem Kern über eine Zwischenschicht verbunden ist.

Kern-Mantel-Partikel, deren Kern im wesentlichen fest ist und eine im wesentlichen monodisperse Größenverteilung aufweist, wobei ein Unterschied zwischen dem Brechungsindix des Kernmaterials und dem des Mantelmaterials besteht, und deren Kern aus einem Material besteht, das entweder nicht oder bei einer Temperatur oberhalb der Fließtemperatur des Mantelmaterials fließfähig wird und deren Mantel mit dem Kern über eine Zwischenschicht verbunden ist, sowie die Verwendung solcher Partikel zur Herstellung von Formkörpern sind daher weitere Gegenstände der vorliegenden Erfindung.

Bei der Zwischenschicht handelt es sich in einer bevorzugten Ausführungsform der Erfindung um eine Schicht vernetzter oder zumindest teilweise vernetzter Polymere. Dabei kann die Vernetzung der Zwischenschicht über freie Radikale, beispielsweise induziert durch UV-Bestrahlung, oder vorzugsweise über di- bzw. oligofunktionelle Monomere erfolgen. Bevorzugte Zwischenschichten dieser Ausführungsform enthalten 0,01 bis 100 Gew.-%, insbesondere bevorzugt 0,25 bis 10 Gew.-%, di- bzw. oligofunktionelle Monomere. Bevorzugte di- bzw. oligofunktionelle Monomere sind insbesondere Isopren und Allylmethacrylat (ALMA). Eine solche Zwischenschicht vernetzter oder zumindest teilweise vernetzter Polymere hat vorzugsweise eine Dicke im Bereich von 10 bis 20 nm. Fällt die Zwischenschicht dicker aus, so wird der Brechungsindex der Schicht so gewählt, dass er entweder dem Brechungsindex des Kernes oder dem Brechungsindex des Mantels entspricht.

Werden als Zwischenschicht Copolymere eingesetzt, die, wie oben beschrieben, ein vernetzbares Monomer enthalten, so bereitet es dem Fachmann keinerlei Probleme, entsprechende copolymerisierbare Monomere geeignet auszuwählen. Beispielsweise können entsprechende copolymerisierbare Monomere aus einem sogenannten Q-e-Schema ausgewählt werden (vgl. Lehrbücher der Makromolekularen Chemie). So können mit ALMA vorzugsweise Monomere, wie Methylmethacrylat und Acrylsäuremethylester polymerisiert werden.

In einer anderen, ebenfalls bevorzugten Ausführungsform der vorliegenden Erfindung, werden die Mantelpolymere direkt, über eine entsprechende Funktionalisierung des Kernes, an den Kern aufgepfropft. Die Oberflächenfunktionalisierung des Kernes bildet dabei die erfindungsgemäße Zwischenschicht. Die Art der Oberflächenfunktionalisierung richtet sich dabei hauptsächlich nach dem Material des Kernes. Siliciumdioxid-Oberflächen können beispielsweise mit Silanen, die entsprechend reaktive Endgruppen tragen, wie Epoxyfunktionen oder freien Doppelbindungen, geeignet modifiziert werden. Andere Oberflächenfunktionalisierungen, beispielsweise für Metalloxide, können Titanate oder Aluminiumorganyle sein, die jeweils organische Seitenketten mit entsprechenden Funktionen enthalten. Bei polymeren Kernen kann zur Oberflächenmodifizierung beispielsweise ein am Aromaten funktionalisiertes Styrol, wie Bromstyrol, eingesetzt werden. Über diese Funktionalisierung kann dann das Aufwachsen der Mantelpolymeren erreicht werden. Insbesondere kann die Zwischenschicht auch über ionische Wechselwirkungen oder Komplexbindungen eine Haftung des Mantels am Kern bewirken.

In einer bevorzugten Ausführungsform besteht der Mantel dieser Kern-Mantel-Partikel aus im wesentlichen unvernetzten organischen Polymeren, die über eine zumindest teilweise vernetzte Zwischenschicht auf den Kern aufgepfropft sind.

Dabei kann der Mantel entweder aus thermoplastischen oder aus elastomeren Polymeren bestehen. Da der Mantel die Materialeigenschaften und Verarbeitungsbedingungen der Kern-Mantel-Partikel im wesentlichen bestimmt, wird der Fachmann das Mantelmaterial entsprechend üblicher Überlegungen in der Polymertechnologie auswählen. Insbesondere dann, wenn Bewegungen oder Spannungen in einem Material zu optischen Effekten führen sollen, ist der Einsatz von Elastomeren als Mantelmaterial bevorzugt. In erfindungsgemäßen Formkörpern werden durch solche Bewegungen die Abstände zwischen den Kernen verändert. Dementsprechend verändern sich die Wellenlängen des wechselwirkenden Lichtes und die zu beobachtenden Effekte.

Der Kern kann aus den verschiedensten Materialien bestehen. Wesentlich ist erfindungsgemäß, wie bereits ausgeführt, dass eine Brechungsindexdifferenz zum Mantel besteht und der Kern unter den Verarbeitungsbedingungen fest bleibt.

Weiter ist es in einer Erfindungsvariante insbesondere bevorzugt, wenn der Kern aus einem organischen Polymer, das vorzugsweise vernetzt ist, besteht.

In einer anderen ebenfalls bevorzugten Erfindungsvariante besteht der Kern aus einem anorganischen Material, vorzugsweise einem Metall oder Halbmetall oder einem Metallchalcogenid oder Metallpnictid. Als Chalcogenide werden im Sinne der vorliegenden Erfindung solche Verbindungen bezeichnet, in denen ein Element der 16. Gruppe des Periodensystems der elektronegative Bindungspartner ist; als Pnictide solche, in denen ein Element der 15. Gruppe des Periodensystems der elektronegative Bindungspartner ist.

Bevorzugte Kerne bestehen aus Metallchalcogeniden, vorzugsweise Metalloxiden, oder Metallpnictiden, vorzugsweise Nitriden oder Phosphiden. Metall im Sinne dieser Begriffe sind dabei alle Elemente, die im Vergleich zu den Gegenionen als elektropositiver Partner auftreten können, wie die klassischen Metalle der Nebengruppen, beziehungsweise die Hauptgruppenmetalle der ersten und zweiten Hauptgruppe, genauso jedoch auch alle Elemente der dritten Hauptgruppe, sowie Silicium, Germanium, Zinn, Blei, Phosphor, Arsen, Antimon und Bismuth. Zu den bevorzugten Metallchalcogeniden und Metallpnictiden gehören insbesondere Silciumdioxid, Aluminiumoxid, Galliumnitrid, Bor- und Aluminiumnitrid sowie Silicium- und Phosphomitrid.

Als Ausgangsmaterial für die Herstellung der erfindungsgemäßen Kern-Mantel-Partikel werden in einer Variante der vorliegenden Erfindung bevorzugt monodisperse Kerne aus Siliciumdioxid eingesetzt, die beispielsweise nach dem in US 4 911 903 beschriebenen Verfahren erhalten werden können. Die Kerne werden dabei durch hydrolytische Polykondensation von Tetraalkoxysilanen in einem wäßrigammoniakalischen Medium hergestellt, wobei man zunächst ein Sol von Primärteilchen erzeugt und anschließend durch ein kontinuierliches, kontrolliertes Zudosieren von Tetraalkoxysilan die erhaltenen SiO₂-Partikel auf die gewünschte Teilchengröße bringt. Mit diesem Verfahren sind monodisperse SiO₂-Kerne mit mittleren Teilchendurchmessern zwischen 0,05 und 10 µm bei einer Standardabweichung von 5 % herstellbar.

Weiterhin sind als Ausgangsmaterial SiO₂-Kerne bevorzugt, die mit (Halb)Metallen oder im sichtbaren Bereich nichtabsorbierenden Metalloxiden, wie z.B. TiO₂, ZrO₂, ZnO₂, SnO₂ oder Al₂O₃, beschichtet sind. Die Herstellung von mit Metalloxiden beschichteter SiO₂-Kerne ist beispielsweise in US 5 846 310, DE 198 42 134 und DE 199 29 109 näher beschrieben.

Als Ausgangsmaterial sind auch monodisperse Kerne - aus nichtabsorbierenden Metalloxiden wie TiO₂, ZrO₂, ZnO₂, SnO₂ oder Al₂O₃ oder Metalloxidgemischen einsetzbar. Ihre Herstellung ist beispielsweise in EP 0 644 914 beschrieben. Weiterhin ist das Verfahren gemäß EP 0 216 278 zur Herstellung monodisperser SiO₂-Kerne ohne weiteres und mit gleichem Ergebnis auf andere Oxide übertragbar. Zu einem Gemisch aus Alkohol, Wasser und Ammoniak, dessen Temperatur mit einem Thermostaten auf 30 bis 40 °C genau eingestellt wird, werden unter intensiver Durchmischung Tetraethoxysilan, Tetrabutoxytitan, Tetrapropoxyzirkon oder deren Gemische in einem Guss zugegeben und die erhaltene Mischung für weitere 20 Sekunden intensiv gerührt, wobei sich eine Suspension von monodispersen Kerne im Nanometerbereich ausbildet. Nach einer Nachreaktionszeit von 1 bis 2 Stunden werden die Kerne auf die übliche Weise, z.B. durch Zentrifugieren, abgetrennt, gewaschen und getrocknet.

Weiterhin sind als Ausgangsmaterial für die Herstellung der erfindungsgemäßen Kern-Mantel-Partikel auch monodisperse Kerne aus Polymeren geeignet, die Partikel, beispielsweise Metalloxide, eingeschlossen enthalten. Solche Materialien werden beispielsweise von der Firma micro caps Entwicklungs- und Vertriebs GmbH in Rostock angeboten. Nach kundenspezifischen Anforderungen werden Mikroverkapselungen auf der Basis von Polyestern, Polyamiden und natürlichen und modifizierten Kohlenhydraten gefertigt.

Einsetzbar sind weiterhin monodisperse Kerne aus Metalloxiden, die mit organischen Materialien, beispielsweise Silanen, beschichtet sind. Die monodispersen Kerne werden in Alkoholen dispergiert und mit gängigen Organoalkoxysilanen modifiziert. Die Silanisierung sphärischer Oxid partikel ist auch in DE 43 16 814 beschrieben. Dabei bilden die Silane vorzugsweise die o.g. Zwischenschicht.

Für die beabsichtigte Verwendung der erfindungsgemäßen Kern/Mantel-Partikel zur Herstellung von Formkörpern ist es wichtig, dass das Mantelmaterial verfilmbar ist, d. h., dass es durch einfache Maßnahmen soweit erweicht, visco-elastisch plastifiziert oder verflüssigt werden kann, dass die Kerne der Kern/Mantel-Partikel zumindest Domänen regelmäßiger Anordnung ausbilden können. Die in der durch Verfilmung der Mantel der Kern/Mantel-Partikel gebildeten Matrix regelmäßig angeordneten Kerne bilden ein Beugungsgitter, das Interferenzerscheinungen hervorruft und dadurch zu sehr interessanten Farbeffekten führt.

Die Materialien von Kern und Mantel können, sofern sie den oben angegebenen Bedingungen genügen, anorganischen, organischen oder auch metallischen Charakter haben oder es können Hybridmaterialien sein.

Im Hinblick auf die Möglichkeit, die erfindungsrelevanten Eigenschaften der Kerne der erfindungsgemäßen Kern/Mantel-Partikel nach Bedarf zu variieren ist es jedoch oft zweckmäßig, wenn die Kerne ein oder mehrere Polymere und/oder Copolymere (Kern-Polymere) enthalten oder sie aus solchen Polymeren bestehen.

Vorzugsweise enthalten die Kerne ein einziges Polymer oder Copolymer. Aus dem gleichen Grund ist es zweckmäßig, dass auch der Mantel der erfindungsgemäßen Kern/Mantel-Partikel ein oder mehrere Polymere und/oder Copolymere (Mantel-Polymere; Matrix-Polymere) oder Polymer-Vorprodukte und gegebenenfalls Hilfs- und Zusatzstoffe enthält, wobei die Zusammensetzung des Mantels so gewählt werden kann, dass sie in nichtquellender Umgebung bei Raumtemperatur im wesentlichen formbeständig und klebfrei ist.

Mit der Verwendung von Polymersubstanzen als Mantelmaterial und ggf. Kernmaterial gewinnt der Fachmann die Freiheit deren relevante Eigenschaften, wie z. B. ihre Zusammensetzung, die Teilchengröße, die mechanischen Daten, den Brechungsindex, die Glasübergangstemperatur, den Schmelzpunkt und das Gewichtsverhältnis von Kern:Mantel und damit auch die anwendungstechnischen Eigenschaften der Kern/Mantel-Partikel festzulegen, die sich letztlich auch auf die Eigenschaften der daraus hergestellten Formkörper auswirken.

Polymere und/oder Copolymere, die in dem Kernmaterial enthalten sein können oder aus denen es besteht, sich hochmolekulare Verbindungen, die der oben für das Kernmaterial gegebenen Spezifikation entsprechen. Geeignet sind sowohl Polymerisate und Copolymerisate polymerisierbarer ungesättigten Monomerer als auch Polykondensate und Copolykondensate von Monomeren mit mindestens zwei reaktiven Gruppen, wie z. B. hochmolekulare aliphatische, aliphatisch/aromatische oder vollaromatische Polyester, Polyamide, Polycarbonate, Polyharnstoffe und Polyurethane, aber auch Aminoplast- und Phenoplast-Harze, wie z. B. Melamin/Formaldehyd-, Harnstoff/Formaldehyd- und Phenol/Formaldehy-Kondensate.

Zur Herstellung von Epoxidharzen, die ebenfalls als Kernmaterial geeignet sind, werden üblicherweise Epoxid-Präpolymerisate, die beispielsweise durch Reaktion von Bisphenol A oder anderen Bisphenolen, Resorcin, Hydrochinon, Hexandiol, oder anderen aromatischen oder aliphatischen Di-oder Polyolen, oder Phenol-Formaldehyd-Kondensaten, oder deren Mischungen untereinander mit Epichlorhydrin, oder anderen Di- oder Polyepoxiden erhalten werden, mit weiteren zur Kondensation befähigten Verbindungen direkt oder in Lösung vermischt und aushärten gelassen.

Zweckmäßigerweise sind die Polymeren des Kernmaterials in einer bevorzugten Erfindungsvariante vernetzte (Co-)Polymere, da diese üblicherweise erst bei hohen Temperaturen ihren Glasübergang zeigen. Diese vernetzten Polymeren können entweder bereits im Verlauf der Polymerisation bzw. Polykondensation oder Copolymerisation bzw. Copolykondensation vernetzt worden sein, oder sie können nach Abschluß der eigentlichen (Co-)Polymerisation bzw. (Co-)Polykondensation in einem gesonderten Verfahrensschritt nachvemetzt worden sein.

Eine detaillierte Beschreibung der chemischen Zusammensetzung geeigneter Polymere folgt weiter unten.

Für das Mantelmaterial eignen sich, wie für das Kernmaterial, im Prinzip Polymere der oben bereits genannten Klassen, sofern sie so ausgewählt bzw. aufgebaut werden, dass sie der oben für die Mantelpolymeren gegebenen Spezifikation entsprechen.

Günstig für gewisse Anwendungen, wie z. B. zur Herstellung von Beschichtungen oder Farbfolien ist es, wie bereits oben gesagt, wenn das Polymermaterial der die Matrixphase bildenden Mantel der erfindungsgemäßen Kern-Mantel-Partikel ein elastisch deformierbares Polymer ist, z. B. ein Polymerisat mit niedriger Glasübergangstemperatur. In diesem Fall kann man es erreichen, dass die Farbe des erfindungsgemäßen Formkörpers bei Dehnung und Stauchung variiert. Interessant für die Anwendung sind auch solche erfindungsgemäßen Kern/Mantel-Partikel, die bei der Verfilmung zu Formkörpem führen, die einen Dichroismus zeigen.

Polymere, die den Spezifikationen für ein Mantelmaterial genügen, finden sich ebenfalls in den Gruppen der Polymerisate und Copolymerisate polymerisierbarer ungesättigter Monomerer, als auch der Polykondensate und Copolykondensate von Monomeren mit mindestens zwei reaktiven Gruppen, wie z. B. der hochmolekularen aliphatischen, aliphatisch/aromatischen oder vollaromatischen Polyester und Polyamide.

Unter Berücksichtigung der obigen Bedingungen für die Eigenschaften der Mantelpolymeren (= Matrixpolymeren) sind für ihre Herstellung im Prinzip ausgewählte Bausteine aus allen Gruppen organischer Filmbildner geeignet.

Einige weitere Beispiele mögen die breite Palette der für die Herstellung der Mantel geeigneten Polymeren veranschaulichen.

Soll der Mantel vergleichsweise niedrig brechend sein, so eignen sich beispielsweise Polymerisate wie Polyethylen, Polypropylen, Polyethylenoxid, Polyacrylate, Polymethacrylate, Polybutadien, Polymethylmethacrylat, Polytetrafluorethylen, Polyoxymethylen, Polyester, Polyamide, Polyepoxide, Polyurethan, Kautschuk, Polyacrylnitril und Polyisopren.

Soll der Mantel vergleichsweise hochbrechend sein, so eignen sich für den Mantel beispielsweise Polymerisate mit vorzugsweise aromatischer Grundstruktur wie Polystyrol, Polystyrol-Copolymerisate wie z. B. SAN, aromatisch-aliphatische Polyester und Polyamide, aromatische Polysulfone und Polyketone, Polyvinylchlorid, Polyvinylidenchlorid, sowie bei geeigneter Auswahl eines hochbrechenden Kernmaterials auch Polyacrylnitril oder Polyurethan.

In einer erfindungsgemäß besonders bevorzugten Ausführungsform von Kern-Mantel-Partikeln besteht der Kern aus vernetztem Polystyrol und der Mantel aus einem Polyacrylat, vorzugsweise Polyethylacrylat, Polybutylacrylat, Polymethylmethacrylat und/oder einem Copolymeren davon.

Hinsichtlich Teilchengröße, Teilchengrößenverteilung und Brechungsindexdifferenzen gilt für die erfindungsgemäßen Kern-Mantel-Partikel analog das bereits oben zu den Formkörpern gesagte.

Im Hinblick auf die Verarbeitbarkeit der Kern-Mantel-Partikel zu Formkörpern ist es von Vorteil, wenn das Gewichtsverhältnis von Kern zu Mantel im Bereich von 2:1 bis 1:5, vorzugsweise im Bereich von 3:2 bis 1:3 und insbesondere bevorzugt im Bereich von kleiner als 1,2:1 liegt. In speziellen Ausführungsformen der vorliegenden Erfindung ist es sogar bevorzugt, wenn das Gewichtsverhältnis von Kern zu Mantel kleiner als 1:1 ist, wobei eine typische Obergrenze des Mantelanteiles bei einem Gewichtsverhältnis von Kern zu Mantel von 2:3 liegt.

Die erfindungsgemäßen Kern-Mantel-Partikel lassen sich nach verschiedenen Verfahren herstellen. Eine bevorzugte Möglichkeit, die Partikel zu erhalten, ist ein weiterer Gegenstand der vorliegenden Erfindung. Es handelt sich dabei um ein Verfahren zur Herstellung von Kern-Mantel-Partikeln, durch a) Oberflächenbehandlung monodisperser Kerne, und b) Aufbringen des Mantels aus organischen Polymeren auf die behandelten Kerne.

In einer Verfahrensvariante werden die monodispersen Kerne in einem Schritt a) durch Emulsionspolymerisation erhalten.

In einer bevorzugten Erfindungsvariante wird auf die Kerne in Schritt a) eine vernetzte polymere Zwischenschicht, vorzugsweise durch Emulsionspolymerisation oder durch ATR-Polymerisation, aufgebracht, die vorzugsweise reaktive Zentren aufweist, an die der Mantel kovalent angebunden werden kann. ATR-Polymerisation steht hier für Atomic Transfer Radicalic Polymerisation, wie sie beispielsweise in K. Matyjaszewski, Practical Atom Transfer Radical Polymerization, Polym. Mater. Sci. Eng. 2001, 84 beschrieben wird. Die Einkapselung anorganischer Materalien mittel ATRP wird beispielsweise in T. Werne, T. E. Patten, Atom Transfer Radical Polymerization from Nanoparticles: A Tool for the Preparation of Well-Defined Hybrid Nanostructures and for Understanding the Chemistry of Controlled/"Living" Radical Polymerization from Surfaces, J. Am. Chem. Soc. 2001, 123, 7497-7505 und WO 00/11043 beschrieben. Die Durchführung sowohl dieser Methode als auch die Durchführung von Emulsionspolymerisationen sind dem Fachmann für Polymerherstellung geläufig und beispielsweise in den o.g. Literaturstellen beschrieben.

Das flüssige Reaktionsmedium, in dem die Polymerisationen oder Copolymerisationen ausgeführt werden können, besteht aus den bei Polymerisationen, insbesondere bei Verfahren der Emulsionspolymerisation, üblicherweise eingesetzten Lösungs-, Dispergier- oder Verdünnungsmitteln. Hierbei wird die Auswahl so getroffen, dass die zur Homogenisierung der Kempartikel und Mantel-Vorprodukte eingesetzten Emulgatoren eine ausreichende Wirksamkeit entfalten können. Günstig als flüssiges Reaktionsmedium zur Durchführung des erfindungsgemäßen Verfahrens sind wässrige Medien, insbesondere Wasser.

Zur Auslösung der Polymerisation eignen sich beispielsweise Polymerisationsinitiatoren, die entweder thermisch oder photochemisch zerfallen, Radikale bilden, und so die Polymerisation auslösen. Dabei sind unter den thermisch aktivierbaren Polymerisationsinitiatoren solche bevorzugt, die zwischen 20 und 180 °C, insbesondere zwischen 20 und 80 °C zerfallen. Besonders bevorzugte Polymerisationsinitiatoren sind Peroxide, wie Dibenzoylperoxid Di-tert.-Butylperoxid, Perester, Percarbonate, Perketale, Hydroperoxide, aber auch anorganische Peroxide, wie H₂O₂, Salze der Peroxoschwefelsäure und Peroxodischwefelsäure, Azoverbindungen, Boralkylverbindungen sowie homolytisch zerfallende Kohlenwasserstoffe. Die Initiatoren und/oder Photoinitiatoren, die je nach den Anforderungen an das polymerisierte Material in Mengen zwischen 0,01 und 15 Gew.%, bezogen auf die polymerisierbaren Komponenten eingesetzt werden, können einzeln oder, zur Ausnutzung vorteilhafter synergistischer Effekte, in Kombination miteinander angewendet werden. Daneben kommen Redoxsysteme zur Anwendung, wie z.B. Salze der Peroxodischwefelsäure und Peroxoschwefelsäure in Kombination mit niedervalenten Schwefelverbindungen, im speziellen Ammoniumperoxodisulfat in Kombination mit Natriumdithionit.

Auch für die Herstellung von Polykondensationsprodukten sind entsprechende Verfahren beschrieben worden. So ist es möglich, die Ausgangsmaterialien für die Herstellung von Polykondensationsprodukten in inerten Flüssigkeiten zu dispergieren und, vorzugsweise unter Auskreisen niedermolekularer Reaktionsprodukte wie Wasser oder - z. B. bei Einsatz von Dicarbonsäure-di-niederalkylestem zur Herstellung von Polyestern oder Polyamiden - niederen Alkanolen, zu kondensieren.

Polyadditionsprodukte werden analog durch Umsetzung durch Verbindungen erhalten, die mindestens zwei, vorzugsweise drei reaktive Gruppen wie z. B. Epoxid-, Cyanat-, Isocyanat-, oder Isothiocyanatgruppen aufweisen, mit Verbindungen, die komplementäre reaktive Gruppen tragen. So reagieren Isocyanate beispielsweise mit Alkoholen zu Urethanen, mit Aminen zu Harnstoffderivaten, während Epoxide mit diesen Komplementären zu Hydroxyethem bzw. Hydroxyaminen reagieren. Wie die Polykondensationen können auch Polyadditionsreaktionen vorteilhaft in einem inerten Lösungs- oder Dispergiermittel ausgeführt werden.

Es ist auch möglich, aromatische, aliphatische oder gemischte aromatischaliphatische Polymere, z. B. Polyester, Polyurethane, Polyamide, Polyharnstoffe, Polyepoxide oder auch Lösungspolymerisate, in einem Dispergiermittel, wie z. B. in Wasser, Alkoholen, Tetrahydrofuran, Kohlenwasserstoffen zu dispergieren oder zu emulgieren (Sekundärdispersion) und in dieser feinen Verteilung nachzukondensieren, zu vernetzen und auszuhärten.

Zur Herstellung der für diese Polymerisations-Polykondensations- oder Polyadditionsverfahren benötigten stabilen Dispersionen werden in der Regel Dispergierhilfsmittel eingesetzt.

Als Dispergierhilfsmittel werden vorzugsweise wasserlösliche hochmolekulare organische Verbindungen mit polaren Gruppen, wie Polyvinylpyrrolidon, Copolymerisate aus Vinylpropionat oder -acetat und Vinypyrrolidon, teilverseifte Copolymeriste aus einem Acrylester und Acrylnitril, Polyvinylalkohole mit unterschiedlichem Restacetat-Gehalt, Zelluloseether, Gelatine, Blockcopolymere, modifizierte Stärke, niedermolekulare, carbon- und/oder sulfonsäuregruppenhaltigen Polymerisate oder Mischungen dieser Stoffe verwendet.

Besonders bevorzugte Schutzkolloide sind Polyvinylalkohole mit einem Restacetat-Gehalt von unter 35, insbesondere 5 bis 39 Mol.% und/oder Vinylpyrrolidon-/Vinylpropionat-Copolymere mit einem Vinylestergehalt von unter 35, insbesondere 5 bis 30 Gew.-%.

Es können nichtionische oder auch ionische Emulgatoren, gegebenenfalls auch als Mischung, verwendet werden. Bevorzugte Emulgatoren sind gegebenenfalls ethoxylierte oder propoxylierte, längerkettige Alkanole oder Alkylphenole mit unterschiedlichen Ethoxylierungs- bzw. Propoxylierungsgraden (z. B. Addukte mit 0 bis 50 mol Alkylenoxid) bzw. deren neutralisierte, sulfatierte, sulfonierte oder phosphatierte Derivate. Auch neutralisierte Dialkylsulfobernsteinsäureester oder Alkyldiphenyloxiddisulfonate sind besonders gut geeignet.

Besonders vorteilhaft sind Kombinationen dieser Emulgatoren mit den oben genannten Schutzkolloiden, da mit ihnen besonders feinteilige Dispersionen erhalten werden.

Auch spezielle Verfahren zur Herstellung monodisperser Polymerteilchen sind in der Literatur (z. B. R.C. Backus, R.C. Williams, J. Appl, Physics 19, S. 1186, (1948) bereits beschrieben worden und können mit Vorteil insbesondere zur Herstellung der Kerne eingesetzt werden. Hierbei ist lediglich darauf zu achten, dass die oben angegebenen Teilchengrößen eingehalten werden. Anzustreben ist weiter eine möglichst hohe Einheitlichkeit der Polymerisate. Insbesondere die Teilchengröße kann dabei über die Auswahl geeigneter Emulgatoren und/oder Schutzkolloide bzw. entsprechender Mengen dieser Verbindungen eingestellt werden.

Durch die Einstellung der Reaktionsbedingungen, wie Temperatur, Druck, Reaktionsdauer und Einsatz geeigneter Katalysatorsysteme, die in bekannter Weise den Polymerisationsgrad beeinflussen, und die Auswahl der zu ihrer Herstellung eingesetzten Monomeren -nach Art und Mengenanteil- lassen sich gezielt die gewünschten Eigenschaftskombinationen der benötigten Polymeren einstellen. Dabei kann die Teilchengröße beispielsweise über die Auswahl und Menge der Initiatoren und andere Parameter., wie die Reaktionstemperatur, eingestellt werden. Die entsprechende Einstellung dieser Parameter bereitet dem Fachmann auf dem Gebiet der Polymerisation keinerlei Schwierigkeiten.

Monomere, die zu Polymeren mit hohem Brechungsindex führen, sind in der Regel solche, die entweder aromatische Teilstrukturen aufweisen, oder solche, die über Heteroatome mit hoher Ordnungszahl, wie z. B. Halogenatome, insbesondere Brom- oder Jodatome, Schwefel oder Metallionen, verfügen, d. h. über Atome oder Atomgruppierungen, welche die Polarisierbarkeit der Polymeren erhöhen.

Polymere mit niedrigem Brechungsindex werden demgemäss aus Monomeren oder Monomerengemischen erhalten, welche die genannten Teilstrukturen und/oder Atome hoher Ordnungszahl nicht oder nur in geringem Anteil enthalten.

Eine Übersicht über die Brechungsindices verschiedener gängiger Homopolymerisate findet sich z. B. in Ullmanns Encyklopädie der technischen Chemie, 5. Auflage, Band A21, Seite 169. Beispiele für radikalisch polymerisierbare Monomere, die zu Polymeren mit hohem Brechungsindex führen, sind:
Gruppe a): Styrol, im Phenylkern alkylsubstituierte Styrole, α-Methylstyrol, Mono- und Dichlorstyrol, Vinylnaphthalin, Isopropenylnaphthalin, Isopropenylbiphenyl, Vinylpyridin, Isopropenylpyridin, Vinylcarbazol, Vinylanthracen, N-Benzyl-methacrylamid, p-Hydroxymethacrylsäureanilid.
Gruppe b): Acrylate, die aromatische Seitenketten aufweisen, wie z. B. Phenyl-(meth)acrylat (= abgekürzte Schreibweise für die beiden Verbindungen Phenylacrylat und Phenylmethacrylat), Phenylvinylether, Benzyl-(meth)acrylat, Benzylvinylether, sowie Verbindungen der Formeln: 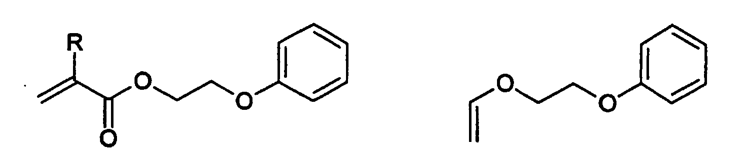 In der obigen und in weiter unten folgenden Formeln sind zur Verbesserung der Übersichtlichkeit und Vereinfachung der Schreibung Kohlenstoffketten nur durch die zwischen den Kohlenstoffatomen bestehenden Bindungen dargestellt. Diese Schreibweise entspricht der Darstellung aromatischer cyclischer Verbindungen, wobei z. B. das Benzol durch ein Sechseck mit alternierend Einfach- und Doppelbindungen dargestellt wird.
   Ferner sind solche Verbindungen geeignet, die anstelle von Sauerstoffbrücken Schwefelbrücken enthalten, wie z. B.: 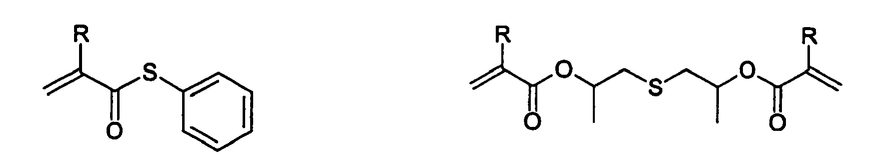 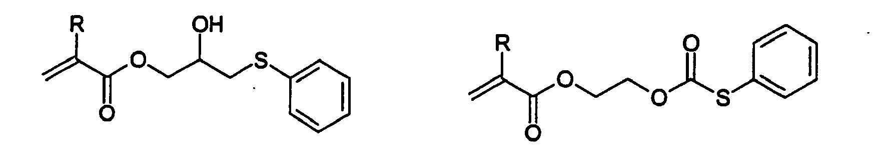 In den obigen Formeln steht R für Wasserstoff oder Methyl. Die Phenylringe dieser Monomeren können weitere Substituenten tragen. Solche Substituenten sind geeignet, die Eigenschaften der aus diesen Monomeren erzeugten Polymerisate innerhalb gewisser Grenzen zu modifizieren. Sie können daher gezielt benutzt werden, um insbesondere die anwendungstechnisch relevanten Eigenschaften der erfindungsgemäßen Formkörper zu optimieren.
   Geeignete Substituenten sind insbesondere Halogen, NO₂, Alkyle mit einem bis zwanzig C-Atomen, vorzugsweise Methyl, Alkoxide mit einem bis zwanzig C-Atomen, Carboxyalkyle mit einem bis zwanzig C-Atomen, Carbonylalkyle mit einem bis zwanzig C-Atomen, oder -OCOO-Alkyle mit einem bis zwanzig C-Atomen. Die Alkylketten dieser Reste können ihrerseits gegebenenfalls substituiert sein, oder durch zweibindige Heteroatome oder Baugruppen, wie z. B. -O-, -S-, -NH-, -COO-, -OCO-oder -OCOO- in nicht benachbarten Stellungen unterbrochen sein.
Gruppe c): Monomere, die über Heteroatome verfügen, wie z. B. Vinylchlorid, Acrylnitril, Methacrylnitril, Acrylsäure, Methacrylsäure, Acrylamid und Methacrylamid oder metallorganische Verbindung, wie z. B. 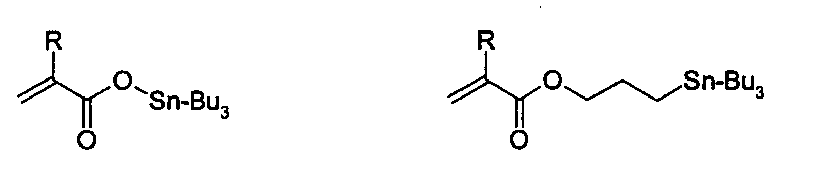
Gruppe d): Eine Erhöhung des Brechungsindex von Polymeren gelingt auch durch Einpolymerisieren Carbonsäuregruppen enthaltender Monomerer und Überführung der so erhaltenen "sauren" Polymeren in die entsprechenden Salze mit Metallen höheren Atomgewichts, wie z. B. vorzugsweise mit K, Ca, Sr, Ba, Zn, Pb, Fe, Ni, Co, Cr, Cu, Mn, Sn oder Cd.

Die oben genannten Monomeren, die einen hohen Beitrag zum Brechungsindex der daraus hergestellten Polymeren leisten, können homopolymerisiert oder untereinander copolymerisiert werden. Sie können auch mit einem gewissen Anteil von Monomeren, die einen geringeren Beitrag zum Brechungsindex leisten, copolymerisiert werden. Solche copolymerisierbaren Monomere mit niedrigerem Brechungsindex-Beitrag sind beispielsweise Acrylate, Methacrylate, Vinylether oder Vinylester mit rein aliphatischen Resten.

Als vernetzende Mittel zur Herstellung vernetzter Polymerkerne aus radikalisch erzeugten Polymerisaten können darüberhinaus auch alle bi-oder polyfunktionellen Verbindungen eingesetzt werden, die mit den oben genannten Monomeren copolymerisierbar sind, oder die nachträglich mit den Polymeren unter Vernetzung reagieren können.

Im Folgenden sollen Beispiele geeigneter Vernetzer vorgestellt werden, die zur Systematisierung in Gruppen eingeteilt werden:
Gruppe 1: Bisacrylate, Bismethacrylate und Bisvinylether von aromatischen oder aliphatischen di- oder Polyhydroxyverbindungen, insbesondere von Butandiol (Butandiol-di(meth)acrylat, Butandiol-bis-vinylether), Hexandiol (Hexandiol-di(meth)acrylat, Hexandiol-bis-vinylether), Pentaerythrit, Hydrochinon, Bis-hydroxyphenylmethan, Bis-hydroxyphenylether, Bis-hydroxymethyl-benzol, Bisphenol A oder mit Ethylenoxidspacern, Propylenoxidspacern, oder gemischten Ethlenoxid-Propylenoxidspacern.
   Weitere Vernetzer dieser Gruppe sind z. B. Di- oder Polyvinylverbindungen, wie Divinybenzol, oder auch Methylen-bisacrylamid, Triallylcyanurat, Divinylethylenharnstoff, Trimethylolpropan-tri-(meth)acrylat, Trimethylolpropantricinylether, Pentaerythrit-tetra-(meth)acrylat, Pentaerythrit-tetra-vinylether, sowie Vernetzer mit zwei oder mehreren verschiedenen reaktiven Enden, wie z. B. (Meth)allyl-(meth)acrylate der Formeln: 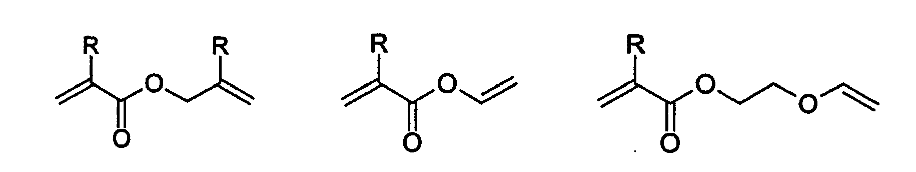 (worin R Wasserstoff oder Methyl bedeutet).
Gruppe 2: Reaktive Vernetzer, die vernetzend, größenteils aber nachvernetzend wirken, z. B. bei Erwärmung oder Trocknung, und die in die Kern- bzw. Mantelpolymere als Copolymere einpolymerisiert werden.
   Beispiele hierfür sind: N-Methylol-(meth)acrylamid, Acrylamidoglycolsäure, sowie deren Ether und/oder Ester mit C₁ bis C₆-Alkoholen, Diacetonacrylamid (DAAM), Glycidylmethacrylat (GMA), Methacryloyloxypropyltrimethoxysilan (MEMO), Vinyl-trimethoxysilan, m-Isopropenyl-benzylisocyanat (TMI).
Gruppe 3: Carbonsäuregruppen, die durch Copolymerisation ungesättigter Carbonsäuren in das Polymer eingebaut worden sind, werden über mehrwertige Metallionen brückenartig vernetzt. Als ungesättigte Carbonsäuren werden hierzu vorzugsweise Acrylsäure, Methacrylsäure, Maleinsäureandhydrid, Itaconsäure und Fumarsäure eingesetzt. Als Metallionen eignen sich Mg, Ca, Sr, Ba, Zn, Pb, Fe, Ni, Co, Cr, Cu, Mn, Sn, Cd. Besonders bevorzugt sind Ca, Mg und Zn, Ti und Zr. Daneben eignen sich auch einwertige Metallionen, wie z.B. Na oder K.
Gruppe 4: Nachvernetzte Additive. Hierunter versteht man bis- oder höher funktionalisierte Additive, die mit dem Polymer (durch Additions- oder vorzugsweise Kondensationsreaktionen) irreversibel unter Ausbildung eines Netzwerks reagieren. Beispiele hierfür sind Verbindungen, die pro Molekül mindestens zwei der folgenden reaktiven Gruppen aufweisen: Epoxid-, Aziridin-, Isocyanat-Säurechlorid-, Carbodiimid- oder Carbonylgruppen, ferner z. B. 3,4-Dihydroxy-imidazolinon und dessen Derivate (®Fixapret@-Marken der BASF).

Wie bereits oben dargelegt, benötigen Nachvernetzer mit reaktiven Gruppen, wie z. B. Epoxid- und Isocyanatgruppen, komplementäre, reaktive Gruppen im zu vernetzenden Polymer. So reagieren Isocyanate beispielsweise mit Alkoholen zu Urethanen, mit Aminen zu Harnstoffderivaten, während Epoxide mit diesen komplementären Gruppen zu Hydroxyethern bzw. Hydroxyaminen reagieren.

Unter Nachvernetzung wird auch die photochemische Aushärtung, eine oxidative, oder eine luft- oder feuchtigkeitsinduzierte Aushärtung der Systeme verstanden.

Die oben angegebenen Monomeren und Vernetzer können beliebig und zielgerichtet in der Weise miteinander kombiniert und (co-)polymerisiert werden, so dass ein gegebenenfalls vernetztes (Co-)polymerisat mit dem gewünschten Brechungsindex und den erforderlichen Stabilitätskriterien und mechanischen Eigenschaften erhalten wird.

Es ist auch möglich, weitere gängige Monomere, z. B. Acrylate, Methacrylate, Vinylester, Butadien, Ethylen oder Styrol, zusätzlich zu copolymerisieren, um beispielsweise die Glastemperatur oder die mechanischen Eigenschaften der Kern- und/oder Mantelpolymeren nach Bedarf einzustellen.

Erfindungsgemäß ebenfalls bevorzugt ist es, wenn das Aufbringen des Mantels aus organischen Polymeren durch Aufpfropfung, vorzugsweise durch Emulsionspolymerisation oder ATR-Polymerisation erfolgt. Dabei lassen sich die oben beschriebenen Methoden und Monomere entsprechend einsetzen.

Insbesondere beim Einsatz anorganischer Kerne kann es auch bevorzugt sein, dass der Kern vor der Aufpolymerisation des Mantels einer Vorbehandlung unterzogen wird, die ein Anbinden des Mantels ermöglicht. Dies kann üblicherweise in einer chemischen Funktionalisierung der Partikeloberfläche bestehen, wie sie für die verschiedensten anorganischen Materialen aus der Literatur bekannt ist. Insbesondere bevorzugt kann es dabei sein, auf der Oberfläche solche chemischen Funktionen zu anzubringen, die als reaktives Kettenende eine Aufpfropfung der Mantelpolymere ermöglichen. Hier sind als Beispiele insbesondere endständige Doppelbindungen, Epoxy-Funktionen, sowie polykondensierbare Gruppen zu nennen. Die Funktionalisierung von Hydroxygruppentragenden Oberflächen mit Polymeren ist beispielsweise aus EP-A-337 144 bekannt. Weitere Methoden zur Modifizierung von Partikeloberflächen sind dem Fachmann wohl bekannt und beispielsweise in verschiedenen Lehrbüchern, wie Unger, K.K., Porous Silica, Elsevier Scientific Publishing Company (1979) beschrieben.

Gegenstand der Erfindung ist weiterhin die Verwendung von erfindungsgemäßen Formkörpern oder von erfindungsgemäßen Kern-Mantel-Partikeln zur Herstellung von Pigmenten. Dabei eignen sich die so erhältlichen Pigmente insbesondere zum Einsatz in Farben, Lacken, Druckfarben, Kunststoffen, keramischen Materialien, Gläsern und kosmetischen Formulierungen. Hierfür können sie auch mit handelsüblichen Pigmenten, beispielsweise anorganischen und organischen Absorptionspigmenten, Metalleffektpigmenten und LC-Pigmenten, gemischt eingesetzt werden. Weiterhin sind die erfindungsgemäßen Partikel auch zur Herstellung von Pigmentpräparationen, sowie zur Herstellung von Trockenpräparaten, wie z.B. Granulaten geeignet. Derartige Pigmentpartikel besitzen vorzugsweise eine plättchenförmige Struktur mit einer durchschnittlichen Teilchengröße von 5 µm - 5 mm.

Dabei kann die Herstellung der Pigmente beispielsweise erfolgen, indem aus den Kern-Mantel-Partikeln zuerst ein Film hergestellt wird, der ggf. gehärtet werden kann. Anschließend kann der Film in geeigneter Weise durch Schneiden oder Brechen und evtl. anschließendes Mahlen zu Pigmenten geeigneter Größe zerkleinert werden. Dieser Vorgang kann beispielsweise in einem kontinuierlichen Bandverfahren erfolgen.

Das erfindungsgemäße Pigment kann dann zur Pigmentierung von Lacken, Pulverlacken, Farben, Druckfarben, Kunststoffen und kosmetischen Formulierungen, wie z.B. von Lippenstiften, Nagellacken, kosmetischen Stiften, Preßpuder, Make-ups, Shampoos, sowie losen Pudern und Gelen verwendet werden.

Die Konzentration des Pigmentes im zu pigmentierenden Anwendungssystem liegt in der Regel zwischen 0,1 und 70 Gew.-%, vorzugsweise zwischen 0,1 und 50 Gew.% und insbesondere zwischen 1,0 und 20 Gew.-%, bezogen auf den Gesamtfestkörpergehalt des Systems. Sie ist in der Regel abhängig vom konkreten Anwendungsfall. Kunststoffe enthalten das erfindungsgemäße Pigment üblicherweise in Mengen von 0,01 bis 50 Gew.-%, vorzugsweise von 0,01 bis 25 Gew.-%, insbesondere von 0,1 bis 7 Gew.%, bezogen auf die Kunststoffmasse. Im Lackbereich wird das Pigmentgemisch, in Mengen von 0,1 bis 30 Gew.-%, vorzugsweise 1 bis 10 Gew.%, bezogen auf die Lackdispersion, eingesetzt. Bei der Pigmentierung von Bindemittelsystemen z.B. für Farben und Druckfarben für den Tiefdruck, Offsetdruck oder Siebdruck, oder als Vorprodukt für Druckfarben, z.B. in Form von hochpigmentierten Pasten, Granulaten, Pellets, etc., haben sich insbesondere Pigmentgemische mit sphärischen Farbmitteln, wie z.B. TiO₂, Ruß, Chromoxid, Eisenoxid, sowie organische "Farbpigmente", als besonders geeignet erwiesen. Das Pigment wird in der Regel in die Druckfarbe in Mengen von 2-35 Gew.-%, vorzugsweise 5-25 Gew.-%, und insbesondere 8-20 Gew.-% eingearbeitet. Offsetdruckfarben können das Pigment bis zu 40 Gew.-% und mehr enthalten. Die Vorprodukte für die Druckfarben, z.B. in Granulatform, als Pellets, Briketts, etc., enthalten neben dem Bindemittel und Additiven bis zu 95 Gew.% des erfindungsgemäßen Pigmentes. Gegenstand der Erfindung sind somit auch Formulierungen, die das erfindungsgemäße Pigment enthalten.

Die nachfolgenden Beispiele sollen die Erfindung näher erläutern, ohne sie zu begrenzen.

### Beispiele

### Verwendete Abkürzungen:

- BDDA: Butan 1,4, dioldiacrylat
- SDS: Dodecylsulfat Natriumsalz
- SDTH: Natriumdithionit
- APS: Ammoniumperoxodisulfat
- KOH: Kaliumhydroxid
- ALMA: Allylmethacrylat
- MMA: Methylmethacrylat
- EA: Ethylacrylat

### Beispiel 1: Herstellung von Kern-Mantel-Partikeln

In einem auf 75°C vorgeheizten Rührkesselreaktor mit Propellerrührer, Argon-Schutzgaseinleitung und Rückflußkühler wird eine auf 4°C temperierte Vorlage, bestehend aus 217 g Wasser, 0,4 g Butandioldiacrylat (Fa. Merck, entstabilisiert), 3,6 g Styrol (Fa. BASF, enstabilisiert) und 80 mg Natriumdodecylsulfat (SDS; Fa. Merck) eingefüllt und unter starkem Rühren dispergiert. Direkt nach dem Einfüllen wird die Reaktion durch direkt aufeinanderfolgende Zugabe von 50 mg Natriumdithionit (Fa. Merck), 250 mg Ammoniumperoxodisulfat (Fa. Merck) und wiederum 50 mg Natriumdithionit (Fa: Merck), jeweils in 5g Wasser gelöst, gestartet. Nach 10 min wird eine Monomeremulsion aus 6,6 g Butandioldiacrylat (Fa. Merck, entstabilisiert), 59,4 g Styrol (Fa. BASF, enstabilisiert), 0,3 g SDS, 0,1 g KOH und 90 g Wasser über einen Zeitraum von 210 min kontinuierlich zudosiert. Der Reaktorinhalt wird 30 min ohne weitere Zugabe gerührt. Anschließend wird eine zweite Monomeremulsion aus 3 g Allylmethacrylat (Fa. Merck, entstabilisiert), 27 g Methylmethacrylat (Fa. BASF, enstabilisiert), 0,15 g SDS (Fa. Merck) und 40 g Wasser über einen Zeitraum von 90 min kontinuierlich zudosiert. Der Reaktorinhalt wird anschließend 30 min ohne weitere Zugabe gerührt. Es wird anschließend eine Monomeremulsion aus 130 g Ethylacrylat (Fa. BASF, entstabilisiert), 139 g Wasser und 0,33 g SDS (Fa. Merck) über einen Zeitraum von 180 min kontinuierlich zudosiert. Zur nahezu vollständigen Abreaktion der Monomere wird anschließend noch 60 min gerührt. Die Kern-Mantel-Partikel werden anschließend in 1 I Methanol ausgefällt, mit 1 I dest. Wasser versetzt, abgenutscht und getrocknet.
Raster- bzw. Transmissionselektronenmikroskopische Aufnahmen der Kern-Mantel-Partikel zeigen, dass die Partikel eine Teilchengröße von 220 nm aufweisen.

Bei analoger Versuchdurchführung kann die Teilchengröße der Partikel über die Tensidkonzentration in der Vorlage variiert werden. Durch Auswahl entsprechender Tensidmengen werden folgende Teilchengrößen erhalten:

| Tensidmenge [mg SDS] | Partikelgröße [nm] |
|---|---|
| 80 | 220 |
| 90 | 200 |
| 100 | 180 |
| 110 | 160 |

### Beispiel 2: Herstellung von Granulaten der Kern-Mantel-Partikel

3 kg der Kern-Mantel-Partikel aus Beispiel 1 werden in einer Schneidmühle (Fa. Rapid, Typ:1528) unter Eiskühlung zerkleinert und anschließend in einem Einschneckenextruder (Plasti-Corder; Fa. Brabender; Schneckendurchmesser 19 mm mit 1-Loch-Düse (3mm)) compoundiert. Nach einer Kühlstrecke wird in einem Granulator A 90-5 (Fa. Automatik) granuliert.

### Beispiel 3a: Herstellung eines Filmes aus Kern-Mantel-Partikeln

2 g der Granulate aus Beispiel 2 werden in einer Presse Collin 300P drucklos auf eine Temperatur von 120°C aufgeheizt und bei einem Druck von 30 bar zu einem Film verpresst. Nach dem Abkühlen auf Raumtemperatur wird der Druck wieder abgesenkt.

Transmissionselektronenmikroskopische Aufnahmen (Fig. 1 und 2 zeigen Partikel einer Teilchengröße von 180 nm) belegen die Ausrichtung der Kerne in der Mantel-Matrix zu einem ausgedehnten Kristallgitter. Figur 2 zeigt dabei die Orientierung von drei übereinanderliegenden Schichten der Kern-Mantel-Partikel zu einem fcc-Gitter.

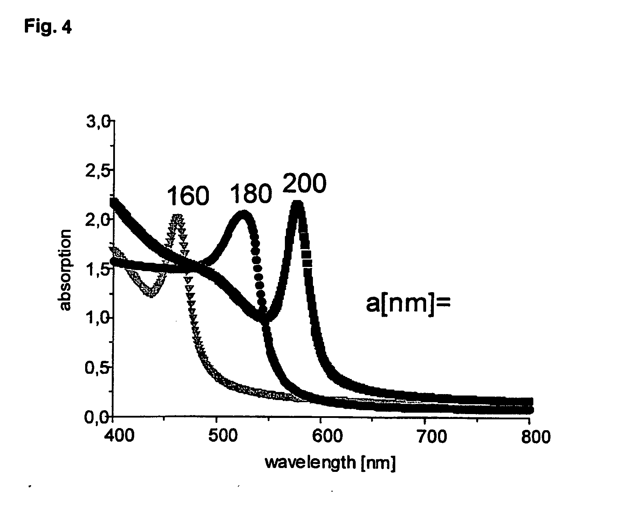

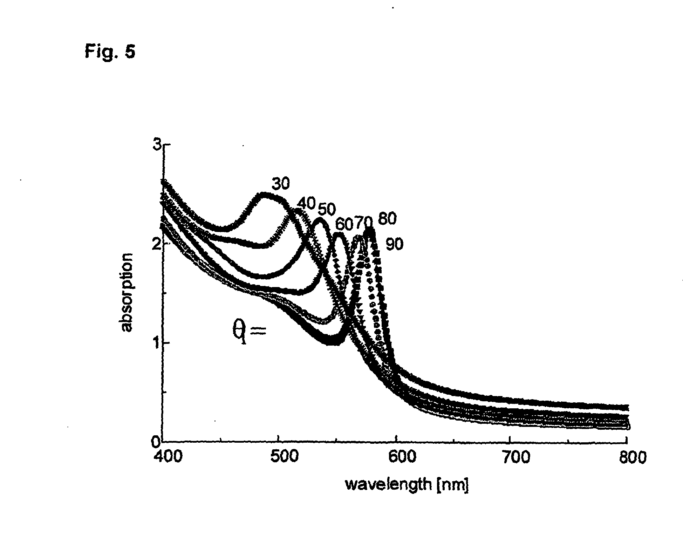

Die Ergebnisse der optischen Absorptionspektroskopie (UV/VIS) sind in Fig. 4 bzw. Fig. 5 dargestellt.

### Beispiel 3b: Herstellung eines Filmes aus Kern-Mantel-Partikeln

25 g der Granulate aus Beispiel 2 werden in einer Presse mit Kassettenkühlsystem (Fa. Dr. Collin GmbH; Typ: 300E) drucklos auf eine Temperatur von 150°C aufgeheizt und bei einem Druck von 250 bar zu einem Film verpresst. Nach dem Abkühlen auf Raumtemperatur wird der Druck nach 8 Minuten wieder abgesenkt.

### Beispiel 4: Herstellung von Formkörpern im Spritzgußverfahren

Den Granulaten aus Beispiel 2 werden 0,2 Gew.-% Trennmittel (Ceridust^{®} 3615; Fa. Clariant) zugemischt. Die Mischung wird mit einer Spritzgußanlage Klöckner Ferromatik 75 FX 75-2F weiter verarbeitet. Dabei wird das Granulat bei einer Zylindertemperatur von 190°C bei 900 bar in die auf 80°C temperierte Form eingespritzt, anschließend in der Form abgekühlt und bei einer Formtemperatur von 30°C entformt. Es resultieren Formkörper mit vom Betrachtungswinkel abhängenden optischem Effekt.

### Beispiel 5: Herstellung einer Flachfolie (Band)

Granulate aus Beispiel 2 werden auf einer Flachfolienanlage bestehend aus einem Einschneckenextruder (Fa. Göttfert; Typ: Extrusiometer; Schneckendurchmesser 20 mm; UD 25), einem dickenverstellbaren Folienwerkzeug (Breite 135 mm) und einem temperierbaren Glättwerk (Fa. Leistritz; Walzendurchmesser 15 mm; Walzenbreite 350 mm) verarbeitet. Es wird ein Folienband von 125 mm Breite und 1 mm Dicke erhalten.

### Beispiel 6: Herstellung von Kern-Mantel-Partikeln mit Siliciumdioxid-Kern (150 nm)

66 g Monospher® 150 - Suspension (Fa. Merck; 38 Gew.% Feststoffgehalt, entsprechend 25 g SiO₂-Monospheres; durchschnittliche Teilchengröße 150 nm; Standardabweichung der mittl. Teilchengröße < 5 %) werden mit 354 g Wasser in einem auf 25°C temperierten Rührkessel-Doppelwandreaktor mit Argon-Schutzgaszuführung, Rückflußkühler und Propellerrührer vorgelegt und mit einer Lösung von 450 mg Aluminiumtrichlorid-Hexahydrat (Fa. Acros) in 50 ml versetzt und 30 min kräftig gerührt. Anschließend wird eine Lösung von 40 mg Natriumdodecylsulfat in 50 g Wasser zugegeben und nochmals 30 min kräftig gerührt.

Danach werden direkt aufeinanderfolgend 50 mg Natriumdithionit, 150 mg Ammoniumperoxodisulfat und wiederum 50 mg Natriumdithionit jeweils in 5 g Wasser zugegeben. Sofort nach der Zugabe wird der Reaktor auf 75°C temperiert und es werden 25 g Ethylacrylat über einen Zeitraum von 120 min kontinuierlich zudosiert. Zur vollständigen Abreaktion des Monomeren wird der Reaktorinhalt anschließend noch 60 min bei 75°C gerührt.

Das erhaltene Hybridmaterial wird abfiltriert und getrocknet und entsprechend Beispielen 2 bis 5 weiter verarbeitet.

Beispiel 6a. Analog lassen sich Kern-Mantel-Partikel mit anderen Siliciumdioxid-Kern-Durchmessern (z.B. 100 nm) herstellen.

### Beispiel 7: Herstellung von Kern-Mantel-Partikeln mit Siliciumdioxid-Kern (250 nm)

60 g Monospher® 250 (Fa. Merck; durchschnittliche Teilchengröße 250 nm; Standardabweichung der mittl. Teilchengröße < 5 %) werden in Ethanol suspendiert. 6 g 3-Methacryloxypropyltrimethoxysilan werden bei 75°C innerhaölb von 15 min unter starkem Rühren zugetropft. Nach 12 h bei 75°C wird das resultierende Pulver abgetrennt und getrocknet. 10 g der funktionalisierten Monospher® 250 werden mit 90 g Wasser und 50 mg Natriumdodecylsulfat versetzt und zum Dispergieren 1 Tag kräftig gerührt. Anschließend wird die Suspension in einem Homogenisator (Niro Soavi, NS1001L) dispergiert. Die Dispersion wird mit 70 g Wasser versetzt und auf 4°C abgekühlt.

Anschließend wird die Dispersion in einen Rührkessel-Doppelwandreaktor mit Argon-Schutzgaszuführung, Rückflußkühler und Propellerrührer vorgelegt. Danach werden direkt aufeinanderfolgend 50 mg Natriumdithionit, 150 mg Ammoniumperoxodisulfat und wiederum 50 mg Natriumdithionit jeweils in 5 g Wasser zugegeben. Sofort nach der Zugabe wird der Reaktor auf 75°C temperiert und es wird eine Emulsion aus 10 g Ethylacrylat und 20 g Wasser über einen Zeitraum von 120 min kontinuierlich zudosiert. Zur vollständigen Abreaktion des Monomeren wird der Reaktorinhalt anschließend noch 60 min bei 75°C gerührt.

Das erhaltene Hybridmaterial wird in einer Lösung aus 10 g Calciumchlorid und 500 g Wasser ausgefällt, abfiltriert und getrocknet und entsprechend Beispielen 2 bis 5 weiter verarbeitet.

### Beispiel 8: Herstellung von Kern-Mantel-Partikeln, wobei der Kern aus Siliciumdioxid mit einer äußeren Hülle aus Titandioxid aufgebaut ist

80 g Monospher®100 (monodisperse Siliciumdioxidkugeln einer mittleren Größe von 100 nm mit einer Strandardabweichung < 5%) der Fa. Merck KGaA werden bei 40°C in 800 ml Ethanol dispergiert. Eine frisch bereitete Lösung, bestehend aus 50 g Tetraethylorthotitanat (Fa. Merck KGaA) und 810 ml Ethanol wird unter starkem Rühren zusammen mit VE-Wasser in die Monosphers/Ethanol Dispersion dosiert. Zunächst erfolgt die Dosierung über einen Zeitraum von 5 Minuten mit einer Zutropfgeschwindigkeit von 0,03 ml/min (Titanatlösung) bzw. 0,72 ml/min. Danach werden die Titanatlösung mit 0,7 ml/min und das Wasser mit 0,03 ml/min bis zum vollständigen Entleeren der entsprechenden Behältnisse zugegeben. Zur Weiterverarbeitung wird die ethanolische Dispersion bei 70°C unter Kühlung am Rückfluß gerührt und über einen Zeitraum von 15 min mit 2 g Methacryloxypropyltrimethoxysilan (Fa. ABCR), gelöst in 10 ml Ethanol, versetzt. Nach Erhitzen über Nacht am Rückfluß wird das resultierende Pulver abgetrennt und getrocknet.10 g der funktionalisierten Siliciumdioxid-Titandioxid-Hybridpartikel werden mit 90 g Wasser und 50 mg Natriumdodecylsulfat versetzt und zum Dispergieren 1 Tag kräftig gerührt. Anschließend wird die Suspension in einem Homogenisator (Niro Soavi, NS1001 L) dispergiert. Die Dispersion wird mit 70 g Wasser versetzt und auf 4°C abgekühlt.

Anschließend wird die Dispersion in einen Rührkessel-Doppelwandreaktor mit Argon-Schutzgaszuführung, Rückflußkühler und Propellerrührer vorgelegt. Danach werden direkt aufeinanderfolgend 50 mg Natriumdithionit, 150 mg Ammoniumperoxodisulfat und wiederum 50 mg Natriumdithionit jeweils in 5 g Wasser zugegeben. Sofort nach der Zugabe wird der Reaktor auf 75°C temperiert und es wird eine Emulsion aus 10 g Ethylacrylat und 20 g Wasser über einen Zeitraum von 120 min kontinuierlich zudosiert. Zur vollständigen Abreaktion des Monomeren wird der Reaktorinhalt anschließend noch 60 min bei 75°C gerührt.

Das erhaltene Hybridmaterial wird in einer Lösung aus 10 g Calciumchlorid und 500 g Wasser ausgefällt, abfiltriert und getrocknet und entsprechend Beispielen 2 bis 5 weiter verarbeitet.

### Beispiel 9: Herstellung von Kern-Mantel-Partikeln im 5I-Reaktor

In einem auf 75 °C temperierten 5 I Doppelmantelreaktor mit Doppelpropellerrührer, Argon-Schutzgaseinleitung und Rückflußkühler wird eine auf 4°C temperierte Vorlage, bestehend aus 1519 g VE-Wasser, 2,8 g BDDA, 25,2 g Styrol und 1030 mg SDS eingefüllt und unter starkem Rühren dispergiert. Direkt danach wird die Reaktion durch aufeinanderfolgendes Einspritzen von 350 mg SDTH, 1,75 g APS und wiederum 350 mg SDTH, jeweils in ca. 20 ml Wasser gelöst, gestartet. Das Einspritzen erfolgt mittels Einwegspritzen. Nach 20 min wird eine Monomeremulsion aus 56,7 g BDDA, 510,3 g Styrol, 2,625 g SDS, 0,7 g KOH und 770 g Wasser über ein Zeitraum von 120 min kontinuierlich über die Taumelkolbenpumpe zudosiert. Der Reaktorinhalt wird 30 min ohne weitere Zugabe gerührt. Anschließend wird eine zweite Monomeremulsion aus 10,5 g ALMA, 94,50 g Methylmetacrylat, 0,525 g SDS und 140 g Wasser über einen Zeitraum von 30 min über die Taumelkolbenpumpe kontinuierlich zudosiert. Nach ca. 15 min werden 350 mg APS zugegeben und danach noch 15 min gerührt. Dann wird eine dritte Monomeremulsion aus 900 g EA, 2,475 g SDS und 900 g Wasser über einen Zeitraum von 240 min kontinuierlich über die Taumelkolbenpumpe zudosiert. Anschließend wird 120 min nachgerührt. Vor und nach jedem Vorlagenwechsel wird ca. eine halbe Minute Argon eingeleitet. Am nächsten Tag wird der Reaktor auf 95 °C erwärmt und eine Wasserdampfdestillation durchgeführt. Die Kern-Mantel-Partikel werden anschließend in 4 I Ethanol ausgefällt, mit 5 %iger Calciumchlorid Lsg. ausgefällt, abfiltriert und getrocknet und entsprechend Beispielen 2 bis 5 weiter verarbeitet. Es ergeben sich Formkörper mit einem Farbeffekt (Farbflop) im Bereich rot-grün.

### Beispiel 10: Herstellung von Kern-Mantel-Partikeln mit Butylacrylat-Mantel

In einem auf 75°C vorgeheizten Rührkesselreaktor mit Propellerrührer, Argon-Schutzgaseinleitung und Rückflußkühler wird eine auf 4°C temperierte Vorlage, bestehend aus 217 g Wasser, 0,4 g Butandioldiacrylat (Fa. Merck, entstabilisiert), 3,6 g Styrol (Fa. BASF, enstabilisiert) und 80 mg Natriumdodecylsulfat (SDS; Fa. Merck) eingefüllt und unter starkem Rühren dispergiert. Direkt nach dem Einfüllen wird die Reaktion durch direkt aufeinanderfolgende Zugabe von 50 mg Natriumdithionit (Fa. Merck), 250 mg Ammoniumperoxodisulfat (Fa. Merck) und wiederum 50 mg Natriumdithionit (Fa. Merck), jeweils in 5g Wasser gelöst, gestartet. Nach 10 min wird eine Monomeremulsion aus 6,6 g Butandioldiacrylat (Fa. Merck, entstabilisiert), 59,4 g Styrol (Fa. BASF, enstabilisiert), 0,3 g SDS, 0,1 g KOH und 90 g Wasser über einen Zeitraum von 210 min kontinuierlich zudosiert. Der Reaktorinhalt wird 30 min ohne weitere Zugabe gerührt. Anschließend wird eine zweite Monomeremulsion aus 3 g Allylmethacrylat (Fa. Merck, entstabilisiert), 27 g Methylmethacrylat (Fa.

BASF, enstabilisiert), 0,15 g SDS (Fa. Merck) und 40 g Wasser über einen Zeitraum von 90 min kontinuierlich zudosiert. Der Reaktorinhalt wird anschließend 30 min ohne weitere Zugabe gerührt. Es wird anschließend eine Monomeremulsion aus 130 g Butylacrylat (Fa. Merck, entstabilisiert), 139 g Wasser und 0,33 g SDS (Fa. Merck) über einen Zeitraum von 180 min kontinuierlich zudosiert. Zur nahezu vollständigen Abreaktion der Monomere wird anschließend noch 60 min gerührt. Die Kern-Mantel-Partikel werden anschließend in 1 I Methanol ausgefällt, mit 1 I dest. Wasser versetzt, abgenutscht, getrocknet und entsprechend Beispielen 2 bis 5 weiter verarbeitet.

### Beispiel 11: Herstellung von Kern-Mantel-Partikeln mit Etylacrylat-Butylacrylat-Mantel

In einem auf 75°C vorgeheizten Rührkesselreaktor mit Propellerrührer, Argon-Schutzgaseinleitung und Rückflußkühler wird eine auf 4°C temperierte Vorlage, bestehend aus 217 g Wasser, 0,4 g Butandioldiacrylat (Fa. Merck, entstabilisiert), 3,6 g Styrol (Fa. BASF, enstabilisiert) und 60 mg Natriumdodecylsulfat (SDS; Fa. Merck) eingefüllt und unter starkem Rühren dispergiert. Direkt nach dem Einfüllen wird die Reaktion durch direkt aufeinanderfolgende Zugabe von 50 mg Natriumdithionit (Fa. Merck), 300 mg Ammoniumperoxodisulfat (Fa. Merck) und wiederum 50 mg Natriumdithionit (Fa. Merck), jeweils in 5g Wasser gelöst, gestartet. Nach 10 min wird eine Monomeremulsion aus 8,1 g Butandioldiacrylat (Fa. Merck, entstabilisiert), 72,9 g Styrol (Fa. BASF, enstabilisiert), 0,375 g SDS, 0,1 g KOH und 110 g Wasser über einen Zeitraum von 150 min kontinuierlich zudosiert. Der Reaktorinhalt wird 30 min ohne weitere Zugabe gerührt. Anschließend wird eine zweite Monomeremulsion aus 1,5 g Allylmethacrylat (Fa. Merck, entstabilisiert), 13,5 g Methylmethacrylat (Fa. BASF, enstabilisiert), 0,075 g SDS (Fa. Merck) und 20 g Wasser über einen Zeitraum von 45 min kontinuierlich zudosiert. Der Reaktorinhalt wird anschließend 30 min ohne weitere Zugabe gerührt. Anschließend werden 50 mg APS in 5g Wasser gelöst zugegeben. Es wird anschließend eine Monomeremulsion aus 59,4 g Ethylacrylat (Fa. MERCK, entstabilisiert), 59,4g Butylacrylat, 1,2g Acrylsäure, 120 g Wasser und 0,33 g SDS (Fa. Merck) über einen Zeitraum von 240 min kontinuierlich zudosiert. Zur nahezu vollständigen Abreaktion der Monomere wird anschließend noch 60 min gerührt. Die Kern-Mantel-Partikel werden anschließend in 1 I Methanol ausgefällt, mit 1 I dest. Wasser versetzt, abgenutscht und getrocknet und entsprechend Beispielen 2 bis 5 weiter verarbeitet..

### Abbildungen

Figur 1: Transmissionselektronenmikroskopische Aufnahme eines Schnittes durch einen Film von 1 mm Dicke, der gemäß Beispiel 3a hergestellt wurde (Teilchengröße 180 nm).
Figur 2: Transmissionselektronenmikroskopische Aufnahme der Aufsicht eines Filmes, der gemäß Beispiel 3a hergestellt wurde (Teilchengröße 180 nm). Es sind 3 übereinanderliegende Schichten der Kern-Mantel-Partikel zu erkennen.
Figur 3: Modell des Kristallisationsmechanismus; Gummielastizität des Mantels.
Figur 4: Absorptionsspektren verschiedener Filme aus Kern-Mantel-Partikeln (gemäß Beispiel 3a); a: durchschnittlicher Partikelabstand [nm]
Figur 5: Absorptionsspektren eines Filmes aus Kern-Mantel-Partikeln (gemäß Beispiel 3a; durchschnittlicher Partikelabstand = 200 nm) in Abhängigkeit des Winkels θ zwischen der Filmoberfläche und dem auftreffenden Lichtstrahl;

## Patentansprüche

1. Formkörper mit optischem Effekt, im wesentlichen bestehend aus Kern-Mantel-Partikeln, deren Mantel eine Matrix bildet und deren Kern fest ist und eine im wesentlichen monodisperse Größenverteilung aufweist, wobei ein Unterschied zwischen den Brechungsindices des Kernmaterials und des Mantelmaterials besteht, **dadurch gekennzeichnet, dass** der Formkörper erhältlich ist durch ein Verfahren, bei dem
a) die Kern-Mantel-Partikel auf eine Temperatur erhitzt werden, bei der der Mantel fließfähig ist, und
die fließfähigen Kern-Mantel-Partikel aus a) einer mechanischen Krafteinwirkung ausgesetzt werden:
und **dass** in den Kern-Mantel-Partikeln der Mantel mit dem Kern über eine Zwischenschicht verbunden ist.

2. Formkörper nach mindestens einem der vorstehenden Ansprüche, **dadurch gekennzeichnet, dass** der Kern aus einem Material besteht, das entweder nicht oder bei einer Temperatur oberhalb der Fließtemperatur des Mantelmaterials fließfähig wird.

3. Formkörper nach mindestens einem der vorstehenden Ansprüche, **dadurch gekennzeichnet, dass** der Formkörper erhältlich ist nach einem Verfahren, bei dem die Temperatur in Schritt a) mindestens 40°C, vorzugsweise mindestens 60°C oberhalb des Glaspunktes des Mantels liegt.

4. Formkörper nach mindestens einem der vorstehenden Ansprüche, **dadurch gekennzeichnet, dass** der Formkörper erhältlich ist nach einem Verfahren, bei dem
c) die Kern-Mantel-Partikel unter Einwirkung der mechanischen Kraft aus b) auf eine Temperatur abgekühlt werden, bei der der Mantel nicht mehr fließfähig ist.

5. Formkörper nach mindestens einem der vorstehenden Ansprüche, **dadurch gekennzeichnet, dass** die mechanische Krafteinwirkung durch uniaxiales Pressen erfolgt und es sich bei dem Formkörper bevorzugt um einen Film handelt.

6. Formkörper nach mindestens einem der Ansprüche 1 bis 4, **dadurch gekennzeichnet, dass** die mechanische Krafteinwirkung während eines Spritzgußvorganges erfolgt.

7. Formkörper nach Anspruch 6, **dadurch gekennzeichnet, dass** die Spritzgussform einen großen Kühlkanalquerschnitt aufweist.

8. Formkörper nach mindestens einem der Ansprüche 1 bis 4, **dadurch gekennzeichnet, dass** die mechanische Krafteinwirkung während einer Extrusion erfolgt.

9. Formkörper nach mindestens einem der vorstehenden Ansprüche, **dadurch gekennzeichnet, dass** der Formkörper zu mindestens 60 Gew.-%, vorzugsweise zu mindestens 80 Gew.-% und insbesondere bevorzugt zu mindestens 95 Gew.-% aus Kern-Mantel-Partikein besteht.

10. Formkörper nach mindestens einem der vorstehenden Ansprüche, **dadurch gekennzeichnet, dass** die Kern-Mantel-Partikel einen mittleren Teilchendurchmesser im Bereich von etwa 5 nm bis etwa 2000 nm, vorzugsweise im Bereich von etwa 5 bis 20 nm oder im Bereich von 50 - 500 nm aufweisen.

11. Formkörper nach mindestens einem der vorstehenden Ansprüche, **dadurch gekennzeichnet, dass** die Differenz zwischen den Brechungsindices des Kernmaterials und des Mantelmaterials mindestens 0,001, vorzugsweise mindestens 0,01 und insbesondere bevorzugt mindestens 0,1 beträgt.

12. Formkörper nach mindestens einem der vorstehenden Ansprüche, **dadurch gekennzeichnet, dass** in die Matrixphase neben den Kernen weitere Nanopartikel, vorzugsweise anorganische Nanopartikel, insbesondere bevorzugt Nanopartikel von Metallen, wie Gold, oder von II-VI- bzw. III-V-Halbleitern, wie Zinksulfid oder Galliumarsenid, eingelagert sind. Nanopartikel von Metallen oder von II-VI- bzw. III-V-Halbleitern oder von Materialen, welche die magnetischen/elektrischen (elektronischen) Eigenschaften der Materialien beeinflussen, wobei insbesondere bevorzugte Nanopartikel ausgewählt sind aus Edelmetallen, wie Silber, Gold und Platin, Halbleitern oder Isolatoren, wie Zink- und Cadmiumchalkogenide, Oxiden, wie Hämatit, Magnetit oder Perowskit, oder Metallpnictiden, z. B. Galliumnitrid oder Mischphasen dieser Materialien.

13. Verfahren zur Herstellung von Formkörpern mit optischem Effekt, **dadurch gekennzeichnet, dass**.
a) Kern-Mantel-Partikel, deren Mantel eine Matrix bildet und deren Kern fest ist und eine im wesentlichen monodisperse Größenverteilung aufweist, wobei ein Unterschied zwischen den Brechungsindices des Kernmaterials und des Mantelmaterials besteht, auf eine Temperatur erhitzt werden, bei der der Mantel fließfähig ist, und
b) die fließfähigen Kern-Mantel-Partikel aus a) einer mechanischen Kraft ausgesetzt werden.

14. Verfahren zur Herstellung von Formkörpern nach Anspruch 13, **dadurch gekennzeichnet, dass** in einem Schritt
c) die Kern-Mantel-Partikel unter Einwirkung der Scherkraft aus b) auf eine Temperatur abgekühlt werden, bei der der Mantel nicht mehr fließfähig ist.

15. Verfahren zur Herstellung von Formkörpern nach mindestens einem der vorstehenden Ansprüche, **dadurch gekennzeichnet, dass** die mechanische Krafteinwirkung während eines Spritzgußvorganges erfolgt und die Spritzgussform vorzugsweise einen großen Kühlkanalquerschnitt aufweist.

16. Verwendung von Formkörpern gemäß den Ansprüchen 1 bis 12 zur Herstellung von Pigmenten.

## Claims

1. Moulding having an optical effect, essentially consisting of core/shell particles whose shell forms a matrix and whose core is solid and has an essentially monodisperse size distribution, where a difference exists between the refractive indices of the core material and of the shell material, **characterised in that** the moulding is obtainable by a process in which
a) the core/shell particles are heated to a temperature at which the shell is flowable, and
the flowable core/shell particles from a) are subjected to the action of a mechanical force, and **in that** the shell in the core/shell particles is bonded to the core via an interlayer.

2. Moulding according to at least one of the preceding claims, **characterised in that** the core consists of a material which is either not flowable or becomes flowable at a temperature above the melting point of the shell material.

3. Moulding according to at least one of the preceding claims, **characterised in that** the moulding is obtainable by a process in which the temperature in step a) is at least 40°C, preferably at least 60°C, above the glass transition temperature of the shell.

4. Moulding according to at least one of the preceding claims, **characterised in that** the moulding is obtainable by a process in which
c) the core/shell particles are cooled under the action of the mechanical force from b) to a temperature at which the shell is no longer flowable.

5. Moulding according to at least one of the preceding claims, **characterised in that** the action of mechanical force takes place through uniaxial pressing, and the moulding is preferably a film.

6. Moulding according to at least one of Claims 1 to 4, **characterised in that** the action of mechanical force takes place during an injection-moulding operation.

7. Moulding according to Claim 6, **characterised in that** the injection mould has a large cooling-channel cross section.

8. Moulding according to at least one of Claims 1 to 4, **characterised in that** the action of mechanical force takes place during extrusion.

9. Moulding according to at least one of the preceding claims, **characterised in that** the moulding consists of at least 60% by weight, preferably at least 80% by weight and particularly preferably at least 95% by weight, of core/shell particles.

10. Moulding according to at least one of the preceding claims, **characterised in that** the core/shell particles have a mean particle diameter in the range from about 5 nm to about 2000 nm, preferably in the range from about 5 to 20 nm or in the range 50 - 500 nm.

11. Moulding according to at least one of the preceding claims, **characterised in that** the difference between the refractive indices of the core material and of the shell material is at least 0.001, preferably at least 0.01 and particularly preferably at least 0.1.

12. Moulding according to at least one of the preceding claims, **characterised in that** further nanoparticles, preferably inorganic nanoparticles, particularly preferably nanoparticles of metals, such as gold, or of II-VI or III-V semiconductors, such as zinc sulfide or gallium arsenide, are included in the matrix phase in addition to the cores. Nanoparticles of metals or of II-VI or III-V semiconductors or of materials which influence the magnetic/electrical (electronic) properties of the materials, preferred nanoparticles being, in particular, those selected from noble metals, such as silver, gold and platinum, semiconductors or insulators, such as zinc chalcogenides and cadmium chalcogenides, oxides, such as haematite, magnetite or perovskite, or metal pnictides, for example gallium nitride, or mixed phases of these materials.

13. Process for the production of mouldings having an optical effect,
**characterised in that**
a) core/shell particles whose shell forms a matrix and whose core is solid and has an essentially monodisperse size distribution, where a difference exists between the refractive indices of the core material and of the shell material, are heated to a temperature at which the shell is flowable, and
b) the flowable core/shell particles from a) are subjected to a mechanical force.

14. Process for the production of mouldings according to Claim 13, **characterised in that** in a step
c) the core/shell particles are cooled under the action of the shear force from b) to a temperature at which the shell is no longer flowable.

15. Process for the production of mouldings according to at least one of the preceding claims, **characterised in that** the action of mechanical force takes place during an injection-moulding operation, and the injection mould preferably has a large cooling-channel cross section.

16. Use of mouldings according to Claims 1 to 12 for the preparation of pigments.

## Revendications

1. Article moulé à effet optique, constitué essentiellement de particules du type coeur/enveloppe dont l'enveloppe forme une matrice et dont le coeur est solide et présente une distribution de taille essentiellement monodispersée, où une différence existe entre les indices de réfraction du matériau de coeur et du matériau d'enveloppe, **caractérisé en ce que** l'article moulé est obtenable par un procédé dans lequel
a) les particules du type coeur/enveloppe sont chauffées jusqu'à une température à laquelle l'enveloppe est écoulable, et
les particules du type coeur/enveloppe écoulables obtenues en a) sont soumises à l'action d'une force mécanique, et **en ce que** l'enveloppe des particules du type coeur/enveloppe est liée au coeur au moyen d'une couche intermédiaire.

2. Article moulé selon au moins l'une des revendications précédentes, **caractérisé en ce que** le coeur est constitué d'un matériau qui soit est non écoulable, soit devient écoulable à une température supérieure au point de fusion du matériau d'enveloppe.

3. Article moulé selon au moins l'une des revendications précédentes, **caractérisé en ce que** l'article moulé est obtenable par un procédé dans lequel la température dans l'étape a) est supérieure d'au moins 40°C, de préférence d'au moins 60°C, à la température de transition vitreuse de l'enveloppe.

4. Article moulé selon au moins l'une des revendications précédentes, **caractérisé en ce que** l'article moulé est obtenable par un procédé dans lequel
c) les particules du type coeur/envetoppe sont refroidies sous l'action d'une force mécanique en b) jusqu'à une température à laquelle l'enveloppe n'est plus écoulable.

5. Article moulé selon au moins l'une des revendications précédentes, **caractérisé en ce que** l'action de la force mécanique s'effectue par l'intermédiaire d'un pressage uniaxial, et l'article moulé est préférablement un film.

6. Article moulé selon au moins l'une des revendications 1 à 4, **caractérisé en ce que** l'action de la force mécanique se produit lors d'une opération de moulage par injection.

7. Article moulé selon la revendication 6, **caractérisé en ce que** le moule à injection présente une grande section transversale de canal de refroidissement.

8. Article moulé selon au moins l'une des revendications 1 à 4, **caractérisé en ce que** l'action de la force mécanique se produit lors d'une extrusion.

9. Article moulé selon au moins l'une des revendications précédentes, **caractérisé en ce que** l'article moulé est constitué d'au moins 60% en poids, de préférence d'au moins 80% en poids et de manière particulièrement préférée d'au moins 95% en poids, de particules du type coeur/enveloppe.

10. Article moulé selon au moins l'une des revendications précédentes, **caractérisé en ce que** les particules du type coeur/enveloppe ont un diamètre moyen des particules dans la plage d'environ 5 nm à environ 2000 nm, de préférence dans la plage d'environ 5 à 20 nm ou bien dans la plage 50 - 500 nm.

11. Article moulé selon au moins l'une des revendications précédentes, **caractérisé en ce que** la différence entre les indices de réfraction du matériau de coeur et du matériau d'enveloppe est d'au moins 0,001, de préférence d'au moins 0,01 et de manière particulièrement préférée d'au moins 0,1.

12. Article moulé selon au moins l'une des revendications précédentes, **caractérisé en ce que** des nanoparticules supplémentaires, de préférence des nanoparticules inorganiques, de manière particulièrement préférée des nanoparticules de métaux, tels que l'or, ou de semi-conducteurs des groupes II-VI ou III-V, tels que le sulfure de zinc ou l'arséniure de gallium, sont incluses dans la phase matricielle en plus des coeurs. Les nanoparticules de métaux ou de semi-conducteurs des groupes II-VI ou III-V ou de matériaux qui influencent les propriétés magnétiques/électriques (électroniques) des matériaux, les nanoparticules préférées étant, en particulier, celles choisies parmi les métaux nobles, tels que l'argent, l'or et le platine, les semi-conducteurs ou les isolateurs, tels que les chalcogénures de zinc et les chalcogénures de cadmium, les oxydes, tels que l'hématite, la magnétite ou la pérovskite, ou les pnictures métalliques, par exemple le nitrure de gallium, ou des phases mixtes de ces matériaux.

13. Procédé de production d'articles moulés à effet optique, **caractérisé en ce que**
a) des particules du type coeur/enveloppe dont l'enveloppe forme une matrice et dont le coeur est solide et présente une distribution de taille essentiellement monodispersée, où une différence existe entre les indices de réfraction du matériau de coeur et du matériau d'enveloppe, sont chauffées jusqu'à une température à laquelle l'enveloppe est écoulable, et
b) les particules du type coeur/enveloppe écoulables obtenues en a) sont soumises à une force mécanique.

14. Procédé de production d'articles moulés selon la revendication 13, **caractérisé en ce que**, dans une étape
c) les particules du type coeur/enveloppe sont refroidies sous l'action de la force de cisaillement se produisant en b) jusqu'à une température à laquelle l'enveloppe n'est plus écoulable.

15. Procédé de production d'articles moulés selon au moins l'une des revendications précédentes, **caractérisé en ce que** l'action de la force mécanique se produit lors d'une opération de moulage par injection, et le moule à injection présente de préférence une grande section transversale de canal de refroidissement.

16. Utilisation d'articles moulés selon les revendications 1 à 12 pour la préparation de pigments.
